(19) Europäisches Patentamt
European Patent Office
Office européen des brevets

(11) **EP 2 408 563 B1**

(12) **EUROPÄISCHE PATENTSCHRIFT**

(45) Veröffentlichungstag und Bekanntmachung des Hinweises auf die Patenterteilung:
**23.09.2015 Patentblatt 2015/39**

(21) Anmeldenummer: **10709835.2**

(22) Anmeldetag: **18.03.2010**

(51) Int Cl.:
**B01L 9/00** (2006.01)  **G01N 35/02** (2006.01)

(86) Internationale Anmeldenummer:
**PCT/EP2010/053556**

(87) Internationale Veröffentlichungsnummer:
**WO 2010/106147 (23.09.2010 Gazette 2010/38)**

(54) **POSITIONIEREINRICHTUNG FÜR EINEN PROBENTRÄGER**

POSITIONING DEVICE FOR A SAMPLE CARRIER

DISPOSITIF DE POSITIONNEMENT DE PORTE-ÉCHANTILLON

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.03.2009 DE 102009013778**

(43) Veröffentlichungstag der Anmeldung:
**25.01.2012 Patentblatt 2012/04**

(73) Patentinhaber: **Quantifoil Instruments Gmbh 07749 Jena (DE)**

(72) Erfinder:
• **HOYER, Olaf**
  **07778 Dornburg (DE)**

• **VESTER, Andreas**
  **07743 Jena (DE)**
• **HEINRICH, Patrick**
  **07745 Jena (DE)**

(74) Vertreter: **Huenges, Martin**
  **Maiwald Patentanwalts GmbH**
  **Elisenhof**
  **Elisenstrasse 3**
  **80335 München (DE)**

(56) Entgegenhaltungen:
EP-A1- 1 111 391       EP-A1- 1 186 891
WO-A1-01/96880        DE-A1-102004 021 664
US-A1- 2002 098 115   US-A1- 2003 017 083
US-A1- 2007 020 152

**Beschreibung**

Die Erfindung betrifft eine Vorrichtung zum Positionieren einer Probenträgerplatte. Darüber hinaus betrifft die Erfindung ein Verfahren zum Positionieren einer Probenträgerplatte.

Für die simultane Prozessierung einer großen Anzahl kleiner Probenvolumina hat sich in der Molekularbiologie die Mikrotiterplatte als Standard durchgesetzt. Dabei handelt es sich um eine rechteckige Platte fest gelegter Abmaße, die eine definierte Anzahl von isolierten Kavitäten (Wells) in Reihen und Spalten enthält. Innerhalb dieser Kavitäten können verschiedene Proben unabhängig voneinander auf ihre Eigenschaften geprüft werden. Üblicherweise finden in der pharmazeutischen, chemischen und biologischen Forschung Mikrotiterplatten mit 96, 384 oder 1536 Kavitäten eine breite Anwendung.

Mit zunehmendem Automatisierungsgrad und der Zunahme der Anzahl der Kavitäten einer Mikrotiterplatte besteht die Tendenz, Befüllungsvorgänge und weitere Prozesse zu automatisieren. Für die simultane Durchführung der Befüllung der Kavitäten sind verschiedene Arten von Pipettierköpfen bekannt, welche eine der Anzahl der Kavitäten entsprechende Anzahl von Pipettenspitzen aufnehmen können.

Je größer die Anzahl der Kavitäten der entsprechenden Mikrotiterplatte ist, desto kleiner wird der Durchmesser jeder dieser Vertiefungen. Damit steigen die Anforderungen an die Positioniergenauigkeit von Mikrotiterplatte zu Pipettierkopf. Weiterhin ist es in der pharmazeutischen, chemischen und biologischen Forschung bei einer großen Zahl von Anwendungen notwendig, eine gute Durchmischung der Komponenten in den Kavitäten der Mikrotiterplatte zu gewährleisten. Eine einfache Möglichkeit zur Beeinflussung der lokalen Konzentration und damit der Wechselwirkungswahrscheinlichkeit der Reaktionspartner ist ein externer Energieeintrag durch definiertes Bewegen (Schütteln) des Reaktionsbehälters. Vorteil eines solchen Verfahrens ist die Kontaminationsfreiheit aufgrund des berührungslosen Energieeintrags (im Gegensatz zu Verfahren mit bewegten Mischwerkzeugen). Weiterhin wird durch diese Mischbewegung einer Schüttelvorrichtung auch die Homogenisierung der Temperatur innerhalb der Probe gegenüber natürlich vorhandenen Ausgleichsvorgängen beschleunigt.

Fertigungstoleranzen bei der Herstellung von Mikrotiterplatten in Länge, Breite und Sockelhöhe wirken sich direkt auf die Positionierung der Mikrotiterplatte aus, da die Mikrotiterplatte herkömmlich oft durch Federn gegen feste Hindernisse verschoben wird.

Zu der Fixierung von Mikrotiterplatten während des Pipettier- oder Schüttelvorgangs sind bei herkömmlichen Systemen oft Positionierstücke fest angebracht, deren Aufgabe es ist, die Mikrotiterplatte stets in Position zu halten. In diesen Positionierstücken können Federn enthalten sein. Die erzeugte Federkraft sollte jedoch so groß sein, dass die Mikrotiterplatte entgegen der durch die orbitale Mischbewegung erzeugten Zentrifugalkraft in Position gehalten wird. Durch die hohe notwendige Kraft kann das Einsetzen der Mikrotiterplatten in die Schüttelvorrichtung durch die Transportvorrichtung (zum Beispiel Greifarm) eines Roboters unter Umständen schwierig oder unmöglich sein. Ein grundsätzlicher Verzicht auf federnde Elemente ist deshalb problematisch, da dann im Aufnahmebereich aufgrund der erwähnten Fertigungstoleranzen (zum Beispiel ± 0,5 mm) ein Spiel notwendig wird, das in einem ungünstigen Fall 1 mm betragen kann. Ein solches Spiel ermöglicht beim Schüttelvorgang unerwünschte Bewegungen der Mikrotiterplatte und widerspricht ebenso dem Ziel einer genauen Positionierung der Mikrotiterplatte, insbesondere bei Mikrotiterplatten mit 1536 Kavitäten, deren Durchmesser zum Beispiel rund 1 mm beträgt.

EP 1,186,891 offenbart, dass zur Ermöglichung der räumlichen Ausrichtung einer Trägerplatte diese an der Unterseite einen Gelenkskopf aufweist, der in einer Gelenkspfanne einer Auflageplatte liegt. Durch eine mittige Öffnung der Gelenkspfanne ist ein Stutzen des Gelenkskopfs geführt, der einen an der Außenseite der Gelenkspfanne anliegenden Klemmring trägt, welcher zwecks Fixierung der Ausrichtung der Trägerplatte mittels einer spannbaren Bride andrückbar ist. Zwei einander an der Oberseite der Trägerplatte gegenüberliegende gegengleich diagonal nach außen verschiebbare Zentrieranschläge sind an diagonal verschiebbaren Schiebern befestigt. Diese greifen an den entgegengesetzten Enden eines drehbaren Kupplungshebels mit demselben ein. Er sitzt an einer senkrechten Welle, welche von der Unterseite der Trägerplatte durch eine Bohrung im Gelenkskopf bis ans Ende des Stutzens reicht. Dort trägt sie einen Betätigungshebel, der zur Bewegung der Zentrieranschläge nach außen zwecks Ermöglichung des Absetzens oder Aufnehmens einer Mikrotiterplatte gegen die Rückstellkraft einer Spiralfeder drehbar ist.

WO 86/07232 offenbart eine Vorrichtung zum Positionieren eines Schaltkreispaneels.

EP 1,111,391 offenbart eine Vorrichtung zur Aufnahme eines Gegenstandes, insbesondere einer Mikrotiterplatte, mit einer Ablagefläche, wobei im Bereich der Ablagefläche ein eine Verschiebung des Gegenstandes in der Ebene derselben einseitig beschränkender Anschlag vorgesehen ist sowie eine Klemmvorrichtung mit einem Klemmteil, das gegen eine Vorspannung dem Anschlag gegenüber zurückziehbar ist.

DE 10 2004 021 664 offenbart eine Mikrotiterplattenschüttelvorrichtung mit einer Schwingplatte, die einen Aufnahmebereich für eine Mikrotiterplatte und darauf angeordnete Positionierstücke für die aufzunehmende Mikrotiterplatte aufweist. Mindestens ein Positionierstück ist bewegbar gelagert und zwischen einer Arbeitsposition und einer Freigabeposition bewegbar. Das mindestens eine beweglich gelagerte Positionierstück ist von der Arbeits- in die Freigabeposition mittels eines Antriebs bewegbar.

WO 99/13339 offenbart eine Positioniervorrichtung zum Positionieren einer Mikrotiterplatte. In einer umgebenden Plattform kann eine Positionierplattform vorgesehen sein. In der Positionierplattform kann eine weitere Plattform vorgesehen sein. Die umgebende Plattform weist Aktuatoren auf. Eine bewegliche Trägerplattform der Positionierplattform kann relativ zu der Trägerplattform bewegt werden. Dabei sind bulkartige Elemente entlang der Längsseite zwischen der innersten weiteren Plattform und der eingehäusten Positionierplattform angeordnet. Mittels eines Fluides, wie beispielsweise Druckluft, kann das bulkartige Elemente das Fluid aufnehmen bzw. das Fluid ausblasen, so dass dadurch eine Bewegung und Positionierung der inneren eingehäusten Plattform umgesetzt werden kann.

Es ist immer noch schwierig, einen Probenaufnahmebehälter auf einer Unterlage präzise zu positionieren.

Es ist eine Aufgabe der vorliegenden Erfindung, einen Probenaufnahmebehälter auf einer Unterlage präzise zu positionieren.

Diese Aufgabe wird durch eine Vorrichtung zum Positionieren einer Probenträgerplatte und durch ein Verfahren zum Positionieren einer Probenträgerplatte mit den Merkmalen gemäß den unabhängigen Patentansprüchen gelöst.

Gemäß einem Ausführungsbeispiel der vorliegenden Erfindung ist eine Vorrichtung zum Positionieren einer Probenträgerplatte (zum Beispiel einer rechteckigen Probenträgerplatte) geschaffen, wobei die Vorrichtung einen Grundkörper (zum Beispiel einen Basiskörper mit rechteckiger Gestalt, auf und/oder in dem zumindest ein Teil der restlichen Komponenten der Vorrichtung angeordnet ist) zum Aufnehmen der Probenträgerplatte (zum Beispiel einer Bodenfläche der Probenträgerplatte), in (insbesondere diagonal) gegenüberliegenden ersten Eckbereichen des Grundkörpers angeordnete Positionieranschläge, die zum Einspannen der Probenträgerplatte (zum Beispiel von gegenüberliegenden Eckbereichen der Probenträgerplatte) vorgespannt (zum Beispiel mit einer zu einem Mittelpunkt des Grundkörpers hin klemmend wirkenden Federkraft) und verschiebbar (zum Beispiel mittels einer Führungsschiene linear verschiebbar, oder anderweitig gegengleich diagonal nach außen oder innen miteinander verschiebbar) gelagert sind, eine in einem zweiten Eckbereich des Grundkörpers angeordnete Betätigungseinrichtung (zum Beispiel eine Aktuatoreinrichtung, mit der ein Betriebszustand der Vorrichtung eingestellt werden kann), die derart eingerichtet ist, dass mittels Betätigens der Betätigungseinrichtung die Positionieranschläge zwischen einem die Probenträgerplatte in Eingriff nehmenden Betriebszustand und einem die Probenträgerplatte freigebenden Betriebszustand überführbar sind (wobei die Positionieranschläge in dem freigebenden Betriebszustand zentrumsferner bezüglich eines Mittelpunkts des Grundkörpers lokalisiert sind als in dem in Eingriff nehmenden Betriebszustand), und ein (zum Beispiel drehbar gelagertes) Kraftübertragungselement (zum Beispiel eine Kreisscheibe) aufweist, das zum Übertragen (insbesondere Umlenken oder sonstigen Kraftwandeln) einer Betätigungskraft von der Betätigungseinrichtung auf die Positionieranschläge eingerichtet ist.

Das Anordnen der Betätigungseinrichtung in einem zweiten Eckbereich des Grundkörpers ist optional. In anderen Ausführungsbeispielen kann die Betätigungseinrichtung in einem anderen Bereich des Grundkörpers angeordnet sein, zum Beispiel entlang einer Seitenkante bzw. in einem gewissen Abstand von dem Eckbereich. Jedes in dieser Beschreibung offenbarte Merkmal ist auch auf ein Ausführungsbeispiel anwendbar, in dem die Betätigungseinrichtung nicht in einem Eckbereich des Grundkörpers angeordnet ist.

Gemäß einem anderen Ausführungsbeispiel der vorliegenden Erfindung ist ein Verfahren zum Positionieren einer Probenträgerplatte bereitgestellt, wobei bei dem Verfahren die Probenträgerplatte auf einem Grundkörper aufgenommen wird, die Probenträgerplatte an vorgespannt und verschiebbar gelagerten Positionieranschlägen eingespannt wird, die in gegenüberliegenden ersten Eckbereichen des Grundkörpers angeordnet sind, eine in einem zweiten Eckbereich des Grundkörpers angeordnete Betätigungseinrichtung zum Überführen der Positionieranschläge zwischen einem die Probenträgerplatte in Eingriff nehmenden Betriebszustand und einem die Probenträgerplatte freigebenden Betriebszustand betätigt wird, und eine Betätigungskraft von der Betätigungseinrichtung auf die Positionieranschläge mittels eines Kraftübertragungselements übertragen wird.

Unter einem Eckbereich des Grundkörpers kann insbesondere eine räumliche Position verstanden werden, an der äußere oder innere Kanten des Grundkörpers bzw. eines Trägers winkelig, insbesondere im Wesentlichen orthogonal, aneinanderstoßen (wenngleich eine gewisse Abrundung in solchen Eckbereichen nicht ausgeschlossen sein muss). An oder unmittelbar benachbart zu einer solchen Position kann dann die entsprechende Komponente räumlich angeordnet sein oder anordbar sein.

Gemäß einem exemplarischen Ausführungsbeispiel ist ein Positioniersystem zum ortsgenauen Positionieren einer Probenträgerplatte wie zum Beispiel einer Mikrotiterplatte geschaffen, wobei die Probenträgerplatte von einer unteren Seite durch einen Grundkörper der Vorrichtung gestützt werden kann, in Eckbereichen von einander gegenüber liegenden Positionieranschlägen der Vorrichtung gestützt werden kann und die Positionieranschläge durch einen in einem Eckbereich des Grundkörpers positionierte Betätigungseinrichtung manuell oder automatisch so verfahren werden können, dass diese entweder ein kraftloses Aufsetzen der Probenträgerplatte auf den Grundkörper ohne Klemmwirkung der Positionieranschläge oder ein kraft- bzw. formschlüssiges Zentrieren der Probenträgerplatte ermöglichen kann. In letzterem Betriebszustand drücken die Positionieranschläge anschaulich aus zwei gegenüberliegenden Richtungen auf gegenüberliegende Ecken der zum Beispiel rechteckförmigen Probenträgerplatte, so dass diese unter dem Einfluss der Klemmwirkung in vorgebbarer Weise zweidimensional symmetrisch positioniert werden kann. Die hohe Positionsgenauigkeit, die mit einer Vorrichtung gemäß einem exemplarischen Ausführungsbeispiel der Erfindung erreicht werden kann, beruht insbesondere darauf, dass ein zentrales Kraftübertragungselement in einen zentralen Abschnitt der Vorrichtung, insbesondere in der Nähe eines Zentrums der Vorrichtung, angeordnet sein kann, das in Wirkverbindung mit den in gegenüberliegenden Eckbereichen angeordneten Positionieranschlägen und dem in einem weiteren Eckbereich angeordneten Betätigungseinrichtung steht. Dadurch kann der Benutzer in einfacher Weise in einem Eckbereich eine Aktuatorbewegung an der Betätigungseinrichtung vornehmen, zum Beispiel eine einfache Schiebebewegung, was einen deterministischen Kraftübertragungsmechanismus in Gang setzt, durch welchen letztlich die beiden Positionieranschläge auf gegenüberliegende Ecken der Probenträgerplatte entsprechende Klemmkräfte ausüben. Dies garantiert nicht nur ein hochgenaues Positionieren der Probenträgerplatte bezüglich der Vorrichtung, sondern führt auch zu einer zuverlässigen Betätigbarkeit. Darüber hinaus ist das System mechanisch stabil, selbst dann, wenn dieses System mit höchster Präzisionsanforderung betrieben werden soll (zum Beispiel wenn die Probenträgerplatte eine Vielzahl von Flüssigkeit-Wells aufweist, in welchen mittels eines Pipettierroboters Fluide injiziert werden sollen und/oder wenn auf die Probenträgerplatte eine definierte Rüttelbewegung, zum Beispiel eine Orbitalbewegung, zum Mischen der fluidischen Proben eingesetzt wird).

Im Weiteren werden zusätzliche Ausführungsbeispiele der Vorrichtung beschrieben. Diese gelten auch für das Verfahren.

Die Vorrichtung kann zum Zentrieren der Probenträgerplatte bezüglich eines Mittelpunkts (oder eines anderen vorgegebenen Referenzpunktes) des Grundkörpers eingerichtet sein. Zum Beispiel für automatische Pipettieranforderungen kann es wünschenswert sein, eine Probenträgerplatte in räumlich sehr genau definierter Weise bezüglich der Vorrichtung zu positionieren, damit ein entsprechendes Positionssignal an die Pipettiervorrichtung übermittelt werden kann, was ein ortsgenaues Pipettieren oder dergleichen ermöglicht. Gemäß dem beschriebenen Ausführungsbeispiel ist die Vorspannung und die Anordnung der Positionieranschläge so konfiguriert, dass in Abwesenheit einer von einem Benutzer ausgeübten Kraft die Probenträgerplatte immer wieder in das Zentrum der Vorrichtung zurückgetrieben wird. Dies erfolgt ohne eine aufwendige Justage, sondern kann allein durch die Kraftkopplung zwischen den beiden Positionieranschlägen und dem Kraftübertragungselement sowie der Betätigungseinrichtung unter gleichzeitiger Ausübung einer vorbestimmten Vorspannung, die auf die Positionieranschläge einwirken kann, erreicht werden.

Die Vorrichtung kann insbesondere zum Positionieren einer Mikrotiterplatte als Probenträgerplatte eingerichtet sein. Unter einer Mikrotiterplatte kann insbesondere ein Laborgerät zur Untersuchung von Probeneigenschaften, zum Beispiel für eine Absorptionsmessung in Photometern oder für High Throughput-Screening-Prüfungen in der Pharma- und Pflanzenschutzforschung, verstanden werden. Eine solche Mikrotiterplatte kann eine rechteckige Kunststoffplatte aufweisen, die aber auch aus Glas oder anderen Materialien hergestellt werden kann. Eine solche Mikrotiterplatte kann viele voneinander isolierte Näpfchen oder Wells in Zeilen und Spalten enthalten. Abmessungen von manchen Mikrotiterplatten sind standardisiert. Folglich kann mit der erfindungsgemäßen Positioniervorrichtung auch eine standardisierte Mikrotiterplatte hochgenau zentriert oder anderweitig in vorgebbarer Weise positioniert werden, was das Zusammenwirken mit weiteren Komponenten (Pipettierautomat oder Photometeranordnung) stark vereinfacht.

Der Grundkörper kann eine Adapterplatte aufweisen, die zum Aufnehmen der Probenträgerplatte eingerichtet sein kann. Diese Adapterplatte kann speziell auf eine ganz bestimmte Probenträgerplatte hin angepasst sein. Zum Beispiel kann eine Formkodierung der Adapterplatte mit einer entsprechenden Formkodierung der Probenträgerplatte korrespondieren, so dass ein fehlerhaftes Aufsetzen der Probenträgerplatte auf der Adapterplatte vermieden ist, da in einem solchen Fall ein Formschluss vermieden sein kann.

Zum Beispiel kann die Adapterplatte eine ebene Adapterplatte mit einer planen, der Probenträgerplatte zugewandten Oberfläche zum formschlüssigen Aufnehmen einer ebenen Probenträgerplatte sein. Wenn die Probenträgerplatte einen ebenen Boden aufweist, kann die oberseitige ebene Oberfläche der Adapterplatte zu dieser Probenträgerplatte korrespondierend vorgesehen sein.

Der Grundkörper kann an seiner der Probenträgerplatte zugewandten Oberfläche eine Aussparung (zum Beispiel einen Hohlraum) aufweisen, in welche die ebene Adapterplatte an einer Oberseite bündig abschließend und passgenau einsetzbar ist. Eine solche Aussparung kann zum Beispiel ein im Wesentlichen rechteckförmiges Loch an einer Oberseite des Grundkörpers sein, welches geformt und dimensioniert sein kann, um eine Adapterplatte präzise aufnehmen zu können. Nach Aufnahme der Adapterplatte in einer solchen Aussparung kann die gemeinsame oberseitige Oberfläche von Grundkörper und Adapterplatte planar sein. Somit kann ein Verkippen oder falsches Positionieren der Probenträgerplatte auf der Adapterplatte sicher vermieden sein.

Die Adapterplatte kann alternativ zu einer planen Oberfläche eine Oberflächenstruktur oder eine Topographie aufweisen, die zum formschlüssigen Aufnehmen einer Probenträgerplatte mit einer zu der Oberflächenstruktur oder Topographie der Adapterfläche komplementären Oberflächenstruktur oder Topographie eingerichtet sein kann. Somit kann eine inverse Form an der Oberseite der Adapterplatte und an der Unterseite der Probenträgerplatte vorgesehen sein, womit die Stabilität der Verbindung zwischen Adapterplatte und Probenträgerplatte weiter verbessert werden kann. Zum Beispiel kann eine solche Oberflächenstruktur der Adapterplatte eine Anordnung von Näpfchen mit kreisförmigem Querschnitt sein, die mit kreisförmigen Überständen an einer Unterseite der Adapterplatte korrespondierend geformt sind.

Die Adapterplatte kann eine darin integrierte Temperiereinheit zum Temperieren einer in der Probenträgerplatte aufgenommenen fluidischen Probe aufweisen. Eine solche Temperiereinheit kann zum Beispiel eine Ohm'sche Temperiereinheit sein, welche mittels Ohm'scher Verluste eines durch die Adapterplatte fließenden elektrischen Stroms eine Erwärmung der Adapterplatte und somit der Fluide der Probenträgerplatte ermöglichen. Alternativ kann ein solches Temperieren wahlweise ein Erwärmen oder ein Abkühlen aufweisen, was zum Beispiel mittels eines Peltierelements erreicht werden kann. Auch andere Temperiersysteme, zum Beispiel unter Verwendung eines durch eine Kavität in der Adapterplatte fließenden Kühl- oder Heizmediums (zum Beispiel Wasser) kann eingesetzt werden. Mittels einer solchen Temperierung kann zum Beispiel entweder die Temperaturen einer Probe konstant gehalten werden oder kann alternativ ein vorbestimmter Temperaturzyklus durchfahren werden. Letzteres kann zum Beispiel für PCR-Analysen ("Polymerase Chain Reaction") vorteilhaft oder wünschenswert sein. Die Temperiereinheit kann benutzerdefiniert einstellbar sein oder kann selbsttätig bzw. reguliert fungieren. Zum Beispiel kann die Temperiereinheit basierend auf einer von einem Temperaturfühler gemessenen Temperatur auf eine bestimmte Temperatur eingeregelt werden.

Aufgrund der verschiedenen Funktionen der Adapterplatte (zum Beispiel Halten, Temperieren, andere Funktionen sind möglich) ist es möglich, die Adapterplatte speziell angepasst auf die Bedürfnisse einer Analyse auszutauschen oder auf dem Grundkörper zu montieren, um die Flexibilität zu erhöhen. Zum Beispiel kann hierfür ein Set mehrerer unterschiedlicher Adapterplatten zum Einsatz kommen, die alle in der Aussparung des Grundkörpers montierbar sein können.

Die Positionieranschläge können ausschließlich in zwei gegenüberliegenden ersten Eckbereichen des Grundkörpers angeordnet sein. Mit anderen Worten kann gemäß einem Ausführungsbeispiel der Erfindung ein erster Eckbereich eines rechteckigen Grundkörpers mit einem ersten Positionieranschlag versehen sein, und ein diagonal entgegenliegender zweiter Eckbereich des rechteckigen Grundkörpers mit einem zweiten Positionieranschlag versehen sein. Die anderen beiden Eckbereiche der Vorrichtung können dann von entsprechenden Positionieranschlägen frei sein. Durch das Einsetzen von genau zwei korrespondierenden und gegenüberliegenden Paaren von Positionierstücken kann sowohl ein Einklemmen von Ecken der Probenträgerplatte und somit ein sicheres Positionieren erreicht werden als auch eine Überbestimmung von Positionierpunkten vermieden werden, welche dann zu einem ungenauen Positionieren der Probenträgerplatte in der Vorrichtung führen kann. Simultan ist eine solche Konfiguration einfach handhabbar und führt zu einem geringen Gewicht und kleiner Bauweise der Vorrichtung.

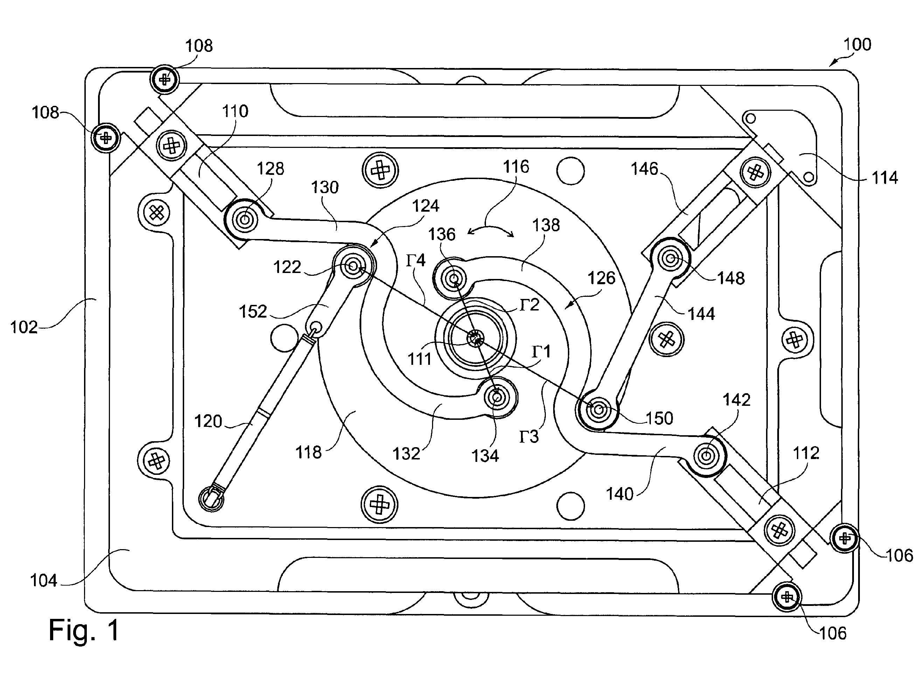

Außerdem kann durch das Vorsehen von Positionieranschlägen an genau zwei gegenüberliegenden Eckbereichen des Grundkörpers eine Art X-Struktur (vergleiche Fig. 1) der Kraftkopplung erreicht werden, welche durch die beiden Positionieranschläge und entsprechende Koppelstangen sowie die Betätigungseinrichtung mit einer entsprechenden Koppelstange sowie einer Vorspanneinrichtung mit einer entsprechenden Koppelstange erreicht werden kann. Dies führt zu einer effizienten und sehr stabilen Anordnung, die zwischen einer starren Betriebsweise und einer flexiblen Betriebsweise mittels eines einzigen Handgriffs umschaltbar ist.

Die Positionieranschläge können in jedem ersten Eckbereich mittels zweier Anschlagelemente mit zueinander senkrechten Anschlaglinien zum Anliegen an ein Eck der Probenträgerplatte gebildet sein. Anders ausgedrückt kann in jedem Eckbereich, in dem eine Längskante und eine dazu orthogonale Querkante der Probenträgerplatte befestigt werden soll, ein erstes Anschlagelement vorgesehen sein, das eine Kraftkomponente einer ersten Richtung auf die Probenträgerplatte ausübt. Ferner kann ein zweites Anschlagelement vorgesehen sein, das eine zu der ersten Richtung senkrechte zweite Kraftkomponente generiert. Hierbei liegt entlang einer zum Beispiel geraden Linie eine Innenlinie (oder eine Innenfläche) des jeweiligen Anschlagelements an der Seitenwandfläche der Probenträgerplatte an.

Alternativ können die Positionieranschläge in jedem ersten Eckbereich mittels zweier Anschlagelemente mit rundem Querschnitt zum Anliegen an die Probenträgerplatten gebildet sein. Ein solches Anschlagelement mit rundem Querschnitt kann zum Beispiel ein zylindrischer Stift, insbesondere ein kreiszylindrischer Stift, oder ein konischer Stift sein. Ein kreiszylindrischer Stift hat den Vorteil eines geringen Aufwands und kann anschaulich mit einer Punktkopplung auf einen entsprechenden Punkt der Probenträgerplatte einwirken. Konische Stifte haben den Vorteil einer hohen Flexibilität und können sich zum Beispiel hin zu dem Grundkörper, an dem sie montiert sein können, verjüngen. Durch die Verjüngung der konischen Stifte zum Grundkörper kann eine Normalkraft zwischen Grundkörper und Probenträgerplatte erzeugt werden.

Es ist auch möglich, die Positionieranschläge als Stifte mit einem kreiszylindrischen Abschnitt und einem konischen Abschnitt auszubilden. Insbesondere kann ein an dem Grundkörper montierter Abschnitt kreiszylindrisch und ein an den kreiszylindrischen Abschnitt angrenzender oberer Abschnitt konisch sein. Dies kann zu einem Platzgewinn bei einem Handhaben bzw. einem Herausheben von Komponenten wie zum Beispiel einer Platte führen.

Die Positionierstifte zum Klemmen können eingerichtet sein, Mikroplatten mit unterschiedlichen Steghöhen zu fixieren. Insbesondere können die Positionierstifte geformt sein, Steghöhen mit 2.5 mm, 4.0 mm und 6.1 mm zu unterstützen. Hierfür können die Stifte ausgelegt sein als Stifte mit insbesondere drei nach oben hin größer werden O-Ringen, wobei die O-Ringe an der oberen Mikrotiterplatten-Stegkante angreifen. Es ist auch möglich, die Stifte aus Vollmaterial (zum Beispiel Edelstahl) mit entsprechenden Phasen und Kanten auszulegen. Die angefasten Kanten entsprechen im Wesentlichen der Funktion der O-Ringe.

Somit können die Anschlagelemente als Stifte mit einer Mehrzahl von daran angebrachten Ringen unterschiedlichen Außendurchmessers gebildet sein. Solche Ringe können zum Beispiel aus einem flexiblen Material, wie zum Beispiel Gummi, gefertigt werden. Es ist möglich, dass ein Außendurchmesser eines jeweiligen Rings umso größer ist, je weiter entfernt ein solcher Ring von dem Trägerelement angeordnet ist. Dies ermöglicht es, Mikrotiterplatten unterschiedlicher Größen in das Gerät einzusetzen.

Alternativ können die Anschlagelemente als Stifte mit einer Mehrzahl von daran integral geformten Stufen unterschiedlichen Außendurchmessers gebildet sein. Solche Stufen können zum Beispiel einstückig bzw. einstoffig mit einem Kern der Stifte gefertigt werden. Es ist möglich, dass ein Außendurchmesser einer jeweiligen Stufe umso größer ist, je weiter entfernt eine solche Stufe von dem Trägerelement angeordnet ist. Dies ermöglicht es, Mikrotiterplatten unterschiedlicher Größen in das Gerät einzusetzen.

Jedem der Positionieranschläge kann ein erstes Linearführungselement zugeordnet sein, in oder an dem der jeweilige Positionieranschlag linear verschiebbar gelagert sein kann. Ein solches Linearführungselement kann ein Langloch aufweisen, entlang welchem ein Stift gleiten kann, um ein Verschieben des jeweiligen Positionieranschlags in Richtung des zentral angeordneten Kraftübertragerelements oder von dem Kraftübertragerelement weg zu ermöglichen. Bewegt sich ein Positionieranschlag in Richtung des Zentrums oder eines anderen definierten Zielpunkts, so bewegt sich auch der andere Positionieranschlag aufgrund der Kraftkopplung in Richtung des Zentrums. Umgekehrt entfernt sich ein Positionieranschlag von diesem Zentrum, wenn sich der andere Positionieranschlag von diesem Zentrum entfernt.

Die ersten Linearführungselemente können so orientiert sein, dass die Positionieranschläge parallel zueinander verschiebbar gelagert sind. Dies kann zum Beispiel dadurch erreicht werden, dass die Linearführungsnuten der ersten Linearführungselemente zueinander im Wesentlichen parallel verlaufend orientiert sind, so dass bei ihrer Bewegung die Positionieranschläge zueinander parallel verschoben werden.

Die ersten Linearführungselemente können insbesondere so orientiert sein, dass die Positionieranschläge parallel versetzt zu einer Diagonalen des Grundkörpers verschiebbar gelagert sind. Anders ausgedrückt bewegen sich gemäß diesem Ausführungsbeispiel die Positionieranschläge in den ersten Linearführungselementen parallel zueinander, aber mit einem vorgegebenen lateralen Versatz. Dann bewegen sich die Positionieranschläge nicht exakt in Richtung eines Mittelpunkts des Grundkörpers, sondern verfehlen bei einer fortgesetzten Bewegung den Mittelpunkt um einen vorgegebenen seitlichen Versatz in tangentialer Richtung. Dadurch kann eine Hebelkraft effizient zwischen dem Kraftübertragungselement und den Positionieranschlägen übertragen werden, was zu einer Drehung des Kraftübertragungselements und somit zu einer effizienten Kraftübertragung führen kann.

Der zweite Eckbereich des Grundkörpers (in dem das Betätigungselement angeordnet sein kann) kann von den ersten Eckbereichen des Grundkörpers (in dem die Positionieranschläge angeordnet sind) verschieden sein. Gemäß diesem Ausführungsbeispiel gibt es somit keinen Eckbereich, in dem sowohl das Betätigungselement als auch ein Positionieranschlag angeordnet ist. Dies ermöglicht eine Vermeidung von unerwünschtem Wechselwirken dieser Elemente und führt zu einer vorteilhaften Kraftübertragung aufgrund der oben beschriebenen X-Konfiguration. Im Zentrum dieses X kann anschaulich das Kraftübertragungselement beweglich gelagert sein, um eine hebelartige Kraftübertragung mit vorgebbaren Hebelarmlängen zu ermöglichen.

Die Betätigungseinrichtung kann einen Schieber zum manuellen Betätigen der Betätigungseinrichtung durch einen Benutzer aufweisen. Ein solcher Schieber kann ebenfalls in einer zweiten Linearführungseinrichtung geführt werden, d.h. zum Beispiel mittels eines verschiebbaren Stiftes realisiert sein, der in einer langgestreckten Nut in einer vorgebbaren Richtung verschoben werden kann. Ein Benutzer ist somit vor einer fehlerhaften Bedienung der Vorrichtung geschützt, da eine solche Betätigungseinrichtung lediglich eine Vorwärts- oder Rückwärtsbewegung zum Überführen des Systems zwischen den beiden Betriebszuständen ermöglicht. Ein Vorsehen der Betätigungseinrichtung in einem Eck des Grundkörpers führt zu einem günstigen Hebelarm, der ein kraftarmes Überführen des Systems zwischen den beiden Betriebszuständen ermöglicht.

Der Schieber kann ein Griffstück aufweisen, welches geformt sein kann, um einem Benutzer intuitiv anzuzeigen, dass es sich hierbei um ein Griffstück handelt. Zum Beispiel kann ein solches Griffstück einen pfeilförmigen Endabschnitt aufweisen, an dem ein Benutzer die Betätigungsrichtung greifen kann. Mit einem solchen pfeilförmigen Endabschnitt ist sowohl ein Schieben als auch ein Ziehen möglich. An einen solchen Schieber können sich zum Beispiel zwei Parallelstreben anschließen, welche eine Kraftübertragung zwischen dem Griffstück und einer in der zweiten Linearführungseinrichtung gleitenden Stift ermöglichen können.

Die Betätigungseinrichtung kann ein Kupplungstück zum Kuppeln mit einer elektrischen Aktuatoreinrichtung aufweisen. Gemäß diesem Ausführungsbeispiel kann ein Betätigen der Betätigungseinrichtung automatisch durch ein elektronisches Steuersystem vorgenommen werden, ohne dass es eines Eingreifens eines Benutzers bedarf. Hierfür kann ein elektrischer Aktuator vorgesehen sein, der beispielsweise nach dem Servomotor-Prinzip fungieren kann.

In einem solchen Ausführungsbeispiel kann die Vorrichtung die elektrische Aktuatorvorrichtung selbst aufweisen. Zum Beispiel kann die elektrische Aktuatoreinrichtung zumindest teilweise oder vollständig in dem Grundkörper integriert sein. Diese elektrische Aktuatoreinrichtung kann zum Übertragen einer elektrischen Betätigungskraft auf das Kraftübertragungselement in das Kupplungsstück eingreifen. Mit anderen Worten kann die elektrische Aktuatoreinrichtung mechanisch mit dem Kupplungsstück zusammenwirken, um die Übertragung einer Kraft elektrischen Ursprungs auf das Betätigungselement zu ermöglichen. Eine solche Kraft führt dann unmittelbar zu einer Bewegung der Positionieranschläge gemäß einer Richtung und einer Amplitude dieser Kraft.

Zum Beispiel kann die elektrische Aktuatoreinrichtung eine Antriebswelle und einen daran angeordneten Hebelarm aufweisen. Die Antriebswelle kann rotierfähig eingerichtet sein und kann sich um ihre eigene Achse drehen. An der Antriebswelle angebracht kann ein transversal abstehender Hebelarm vorgesehen sein, in dessen Endabschnitt eine Ankopplung an einen Kraftübertragungsstift oder Ähnliches erfolgen kann, der in einer Linearführungsnut der zweiten Linearführungseinrichtung des Betätigungselements beweglich angeordnet sein kann. Auf diese Weise kann die elektrische Betätigungskraft effizient übertragen werden. Zu dieser Ausführungsform sind selbstverständlich eine Vielzahl von Alternativen möglich.

Ferner kann die Vorrichtung eine elektrisch steuerbare Pipettiereinrichtung aufweisen, die zum Pipettieren eines Fluids in Kavitäten der Probenträgerplatte eingerichtet sein kann. Zum Beispiel kann eine Probenträgerplatte als Mikrotiterplatte mit zum Beispiel 1536 Kavitäten eingesetzt werden. Dies zeigt, dass sowohl die Anzahl der Wells oder Näpfchen als auch die Anforderungen an die Positioniergenauigkeit bei solchen Mikrotiterplatten und ähnlichen Probenträgerplatten sehr hoch ist. Ein korrespondierender Pipettierroboter kann eine Vielzahl von Pipetten steuern, von denen jede in ein zugehöriges Well eine vorgegebene Menge einer vorgegebenen Substanz oder eine Substanzmischung hinein pipettieren oder heraus pipettieren kann. Schon bei kleinen Positionsungenauigkeiten kann diese präzise Zu- oder Abführung von Fluiden in die jeweiligen Wells negativ beeinflusst werden. Dadurch ist mit einer solchen automatischen Pipettiereinrichtung die erfindungsgemäße Positioniereinrichtung besonders vorteilhaft einsetzbar.

Bei einer elektronisch gesteuerten Betätigungseinrichtung kann die elektronisch steuerbare Pipettiereinrichtung von derselben elektronischen Steuereinheit (zum Beispiel eine CPU, Central Processing Unit) gesteuert werden wie die elektrische Aktuatoreinrichtung. Es ist aber auch möglich, dass zwei separate Steuereinheiten zum Einsatz kommen.

Die Vorrichtung kann alternativ oder ergänzend zu einer Pipettiereinrichtung eine Schütteleinrichtung aufweisen, die zum Schütteln der auf einem Grundkörper montierten Probenträger eingerichtet sein kann. Während der Durchführung eines biochemischen Experiments kann es erforderlich oder wünschenswert sein, dass eine oder mehrere Komponenten oder Substanzen, die in ein jeweiliges Well der Probenträgerplatte eingefüllt sind, miteinander gemischt werden oder in Mischbewegung gehalten bleiben (zum Beispiel um eine Phasentrennung zu vermeiden). Ein solches Mischen kann mittels einer Schüttelbewegung erreicht werden. Mittels des erfindungsgemäßen Vorsehens der Positionieranschläge kann auch während oder nach einer Schüttelbewegung eine Zentrierung der Probenträgerplatte bezüglich der Vorrichtung aufrecht erhalten bleiben.

Zum Beispiel kann eine solche Schüttelvorrichtung realisiert sein, wie in Fig. 24, Fig. 25 und den nachfolgenden Figuren der WO 2008/135565 beschrieben ist. Diese Ausführungsbeispiele werden mittels expliziter Bezugnahme in die Offenbarung dieser Patentanmeldung mit einbezogen, was die Konfiguration einer Schütteleinrichtung ermöglicht.

Insbesondere kann erfindungsgemäß die Schütteleinrichtung zum Beaufschlagen der Probenträgerplatte mit einer Orbitalbewegung (zwecks Schüttelns) eingerichtet sein. Es ist möglich, dass eines oder mehrere Kompensationsgewichte an einer zum Beispiel exzentrischen Antriebswelle einer solchen Schüttelvorrichtung montiert ist oder sind, so dass eine unausgeglichene Masse der Vorrichtung während der Schüttelbewegung zumindest teilweise kompensiert sein kann. Insbesondere können entlang der Welle zwei einander gegenüberliegende Ausgleichsgewichte angeordnet werden. Es ist auch möglich, mittels magnetischer Elemente während des Schüttelns ein Zusammenhalten von verschiedenen Komponenten der Vorrichtung zu vermeiden.

Die Vorrichtung kann ferner eine in oder benachbart zu einem dritten Eckbereich des Grundkörpers angeordnete mechanische (oder auch elektrische oder magnetische) Vorspanneinrichtung aufweisen, die zum Übertragen einer Vorspannung (zum Beispiel einer Zugvorspannung) auf das Kraftübertragungselement eingerichtet sein kann. Eine solche Vorspanneinrichtung kann die X-artige Kraftübertragungskonfiguration einer Vorrichtung gemäß einem exemplarischen Ausführungsbeispiel vervollständigen. Eine solche Vorspanneinrichtung zum Erzeugen einer Zugvorspannung kann die Vorrichtung in einer Grundeinstellung repräsentieren, in der aufgrund der Zugspannung eine Klemmkraft auf die Positionieranschläge ausgeübt wird.

Das Vorspannelement kann zum Beispiel eine Feder, insbesondere eine Schraubenfeder sein, die in dem dritten Eckbereich befestigt sein kann und über das Kraftübertragungselement eine gewandelte Kraft auf die Positionierecken übertragen kann, um eine Klemmwirkung zu initiieren oder zu beenden. Bei Betätigung der Betätigungseinrichtung allerdings kann das System aus diesem Klemmzustand in einem klemmungsfreien Zustand überführt werden, von dem ausgehend die Vorspanneinrichtung aber eine rücktreibende Kraft ausüben kann. Ein Rückführen des Systems in den Klemmzustand ist somit bereits mit geringem Kraftaufwand möglich.

Wenn die Vorspanneinrichtung als eine Feder eingerichtet ist, kann ihr eines Ende an einem Grundkörper, insbesondere in dem dritten Eckbereich des Grundkörpers (zum Beispiel starr) befestigt sein. Deren anderes Ende kann mit dem Kraftübertragungselement gekoppelt sein. Eine solche Feder kann in einem elongierten Zustand eine rücktreibende Kraft generieren, wohingegen sie in einem Kompressionszustand eine Vorwärtskraft ausüben kann.

Der zweite Eckbereich (in dem die Betätigungseinrichtung angeordnet sein kann) kann dem dritten Eckbereich (in dem die Vorspanneinrichtung angeordnet sein kann) diagonal gegenüberliegen. Somit können alle vier Ecken einer im Wesentlichen rechteckförmigen Vorrichtung mit einer entsprechenden funktionellen Komponente versehen sein. Diese Komponenten können aufeinander Kräfte ausüben, indem sie diese Kräfte auf die drehbar gelagerte Kraftübertragungseinrichtung einwirken lassen, die dann eine Umwandlung der Kraft nach Richtung und/oder Betrag vornehmen kann.

Bei der Vorrichtung kann das Kraftübertragungselement eine drehbar gelagerte Kupplungsscheibe aufweisen, die mechanisch mit der Betätigungseinrichtung und den Positionieranschlägen gekoppelt sein kann. Unter einer Kupplungsscheibe kann insbesondere eine flache scheibenartige Anordnung, zum Beispiel mit einer kreisförmigen Grund- und Deckfläche, verstanden werden, welche sehr flach ausgebildet sein kann (zum Beispiel als Kraftübertragungsplatte). Bevorzugt ist somit eine drehbar gelagerte Kupplungsscheibe, da diese eine flache Bauart und somit eine platzsparende Bauweise ermöglicht. Zum Beispiel kann bei dieser drehbar gelagerten Kreiskupplungsscheibe ein Kreisdurchmesser mindestens dreimal, insbesondere mindestens fünfmal, weiter insbesondere mindestens zehnmal, so groß sein wie eine Zylinderhöhe. An einer oberen Oberfläche einer solchen Kupplungsscheibe, die in einem zentralen Abschnitt drehbar um einen Mittelpunkt gelagert sein kann, können die Betätigungseinrichtung, die Positionieranschläge und optional das Vorspannelement angekoppelt sein. Dies kann bewirken, dass eine von einem dieser Elemente herrührende Kraft in vordefinierter Weise auf die anderen Elemente übertragen werden kann. Mittels Einstellens eines radialen Abstands des Anbringens eines der Elemente an einer Kreisoberfläche kann ein Hebelarm für jedes Element auf einen gewünschten höheren oder niedrigeren Wert eingestellt werden.

Unter einer Scheibe kann das Modell eines ebenen Flächentragwerks verstanden werden, das nur durch Kräfte in ihrer Ebene und/oder Biegemomente um Achsen senkrecht zu ihrer Achse belastet. Eine solche Scheibe kann zum Beispiel als Platte mit kreisförmigen Deckflächen unter einer zylindrischen Mantelfläche realisiert sein. Anders ausgedrückt kann als Scheibe ein Zylinder verstanden werden, dessen Dicke um ein Vielfaches geringer ist als dessen Radius.

Die Vorrichtung kann erste Koppelstangen aufweisen, mittels welchen ein jeweiliger Positionieranschlag mit der drehbar gelagerten Kupplungsscheibe gekoppelt sein kann. Die ersten Koppelstangen können mit der drehbar gelagerten Kupplungsscheibe gelenkig verbunden und mit dem jeweiligen Positionieranschlag mit seiner jeweiligen ersten Linearführung gelenkig verbunden sein. Solche Koppelstangen können als starre langgestreckte Streben ausgeführt werden, welche an zwei Endabschnitten gelenkige Lager aufweisen können. An diesen Lagern kann eine solche erste Koppelstange drehbar an einem Positionieranschlag (oder an einem ersten Linearführungselement eines Positionieranschlags) gelenkig drehbar angeordnet sein. Ein gegenüberliegender zweiter Endabschnitt einer solchen Koppelstange kann an der drehbar gelagerten Kupplungsstange gelenkig montiert sein. Zum Beispiel können solche ersten Koppelstangen zentrumsnah zu einer Drehachse der drehbar gelagerten Kupplungsscheibe angeordnet sein, so dass ein relativ geringer Hebelarm einwirkt. Dies kann für die Kraftübertragung bei der erfindungsgemäßen Vorrichtung vorteilhaft sein.

Die ersten Koppelstangen können einen geradlinigen Abschnitt aufweisen und können einen daran sich anschließenden gebogenen Abschnitt aufweisen. Der gebogene Abschnitt kann zum Beispiel viertelkreisförmig oder halbkreisförmig sein. Mittels eines solchen gebogenen Abschnitts ist eine effiziente Kraftumlenkung und eine verschleißarme Lagerung möglich. An den geradlinigen Abschnitt kann jeweils die erste Linearführung angrenzen, wohingegen der gebogene Abschnitt um die drehbar gelagerte Kupplungsscheibe herumgeführt sein kann, zum Beispiel sich entlang eines Umfangswinkels von zum Beispiel 90° oder 180° um ein Zentrum der drehbar gelagerten Kupplungsscheibe herum winden kann.

Ferner kann eine zweite Koppelstange vorgesehen sein, mittels welcher die Betätigungseinrichtung mit der drehbar gelagerten Kupplungsscheibe gekoppelt ist.

Die zweite Koppelstange kann mit der drehbar gelagerten Kupplungsscheibe gelenkig verbunden und mit der Betätigungseinrichtung mittels einer zweiten Linearführung gelenkig verbunden sein. Diese zweite langgestreckte Koppelstange kann somit als eine an beiden Endabschnitten gelenkig gelagerte Strebe aufgefasst werden, die eine Kraftübertragung zwischen der drehbar gelagerten Kupplungsscheibe einerseits und der Betätigungseinrichtung andererseits ermöglichen kann.

Gemäß einem Ausführungsbeispiel kann die zweite Koppelstange an der drehbar gelagerten Kupplungsscheibe radial weit außen angeordnet sein, insbesondere weiter außen angeordnet sein als die entsprechenden Endabschnitte der ersten Koppelstangen, um einen großen Drehhebelarm zu ermöglichen.

Die zweiten Koppelstangen können geradlinig sein, d.h. sich entlang einer vorgegebenen Richtung linear erstrecken. Dies kann für eine starre Kraftübertragungscharakteristik dieser zweiten Koppelstange vorteilhaft sein.

Eine der ersten Koppelstangen und die zweiten Koppelstangen können mittels eines gemeinsamen Verbindungselements (zum Beispiel eines drehbaren Lagers) mit einer drehbar gelagerten Kupplungsscheibe verbunden sein. Gemäß diesem Ausführungsbeispiel kann ein radialer Abstand, an dem die ersten Koppelstangen und die zweiten Koppelstangen an die drehbar gelagerte Kupplungsscheibe angekoppelt sind, identisch sein. Dadurch kann die Zahl der Verbindungselemente (d.h. zum Beispiel gelenkiger Lager) klein gehalten werden.

Die Vorrichtung kann ferner eine dritte Koppelstange aufweisen, mittels welcher die Vorspanneinrichtung mit der drehbar gelagerten Kupplungsscheibe gekoppelt sein kann. Die dritte Koppelstange kann mit der drehbar gelagerten Kupplungsscheibe gelenkig verbunden sein. Mittels einer solchen dritten Koppelstange ist eine Kraftübertragung zwischen der Vorspanneinrichtung, insbesondere einer Schraubenfeder, und der drehbar gelagerten Kupplungsscheibe ermöglicht. Somit kann die Vorspannung der Feder auf die drehbar gelagerte Kupplungsscheibe übertragen werden. Auch für die dritte Koppelstange kann es vorteilhaft sein, dass diese an der Kupplungsscheibe radial weiter außen angreift als die ersten Koppelstangen. Zum Beispiel kann der radiale Abstand, an dem die zweite und die dritte Koppelstange an die drehbar gelagerte Kupplungsscheibe angreifen, identisch sein und im Wesentlichen gleich dem Radius der drehbar gelagerten Kupplungsscheibe entsprechen.

Die dritte Koppelstange kann ebenfalls geradlinig vorgesehen sein. Eine Länge der dritten Koppelstange kann zum Beispiel kleiner sein als eine Länge der zweiten Koppelstange.

Eine der ersten Koppelstangen und die dritte Koppelstangen können mittels eines gemeinsamen Verbindungselements an der drehbar gelagerten Kupplungsscheibe miteinander verbunden sein. Dies ermöglicht wiederum eine einfache Konstruktion, da eine geringe Anzahl von gemeinsamen Verbindungselementen ausreichend ist.

Bei einer Konfiguration, bei der separate Verbindungselemente für jede der ersten, zweiten und dritten Kopplungsstangen zum Montieren an der Kupplungsscheibe vorgesehen sind, können diese koplanar angeordnet sein. Mit anderen Worten können alle Koppelstangen innerhalb einer gemeinsamen Ebene angeordnet sein, was eine flache Bauart ermöglicht. Eine solche Konfiguration kann auch Kräfte senkrecht zu einer solchen Montageebene reduzieren oder minimieren, was den Verschleiß der drehbar gelagerten Elemente und der Koppelstangen verringern kann.

Zum Beispiel können die ersten Koppelstangen, die zweiten Koppelstangen und die dritte Koppelstangen auf einer planaren (zum Beispiel kreisflächigen) Deckfläche der Kupplungsscheibe montiert sein. Bei einer solchen Konfiguration kann die Mantelfläche der Scheibe von einer Ankopplung der Koppelstangen frei sein. Eine solche Konfiguration kann leicht montierbar sein und ermöglicht durch selektive Einstellbarkeit eines jeweiligen Montageradius der Koppelstange bezüglich der drehbar gelagerten Kupplungsscheibe eine Anpassbarkeit des Hebelarms auf eine zugeordnete Aufgabe der jeweiligen Komponenten. Damit ist ein weiterer Freiheitsgrad für die Einstellbarkeit der Kraftübertragungscharakteristik der Vorrichtung gegeben.

Gemäß einem Ausführungsbeispiel kann jede der ersten, zweiten und dritten Koppelstangen mittels eines zugehörigen Verbindungselementes an der drehbar gelagerten Kupplungsscheibe verbunden sein. Die Verbindungselemente zu den ersten Koppelstangen können radial weiter innen an der Kupplungsscheibe montiert sein als die Verbindungselemente der zweiten und/oder dritten Koppelstangen. Dies ermöglicht eine planare Anordnung der Koppelstangen und somit eine platzsparende Bauweise. Gleichzeitig ermöglicht dies einen unterschiedlichen Grad der Koppelkräfte.

Auch die Vorspanneinrichtung und die Betätigungseinrichtungen können zueinander koplanar, d.h. in einer Ebene, montiert sein. Dies trägt weiter zu der flachen Bauart der Vorrichtung bei.

Somit kann eine sichere und positionsstabile Lagerung von Mikrotiterplatten während eines Piettiervorgangs bzw. eines Schüttelvorgangs ermöglicht werden. Es kann eine genaue Positionierung und Zentrierung der Mikrotiterplatte bezüglich des Trägers vorgenommen werden, zum Beispiel durch die Zentrierung bezüglich des Mittelpunktes von Mikrotiterplatte.

Gemäß einem exemplarischen Ausführungsbeispiel der Erfindung können die Betätigungseinrichtung und das Kraftübertragungselement derart gekoppelt sein, dass in dem die Probenträgerplatte in Eingriff nehmenden Betriebszustand das Kraftübertragungselement eine von der Schütteleinrichtung bewirkte Schüttelkraft derart auf die Betätigungseinrichtung überträgt, dass die Betätigungseinrichtung trotz Einwirkens der übertragenen Schüttelkraft gegenüber einem Trägerelement (d.h. insbesondere einer Trägerplatte, auf der die Probenträgerplatte direkt oder unmittelbar angeordnet ist) des Grundkörpers in einer Ruhestellung verbleibt. Mit anderen Worten kann es gemäß einem solchen Ausführungsbeispiel ermöglicht sein, dass die Betätigungseinrichtung zwar zum Einspannen oder Ausspannen der Probenträgerplatte bezüglich Positionieranschlägen betätigt werden kann, so dass in dieser Wirkrichtung dann eine entsprechende Kraft von der Betätigungseinrichtung auf die Positionieranschläge übertragen werden kann. Simultan kann aber nach dem Einspannen der Positionieranschläge eine derartige Koppelstellung der Betätigungseinrichtung relativ zu dem Kraftübertragungselement herbeigeführt werden, dass eine zu einer Bewegung der Betätigungseinrichtung führende Krafteinleitung in umgekehrter Wirkrichtung, d.h. auf die Betätigungseinrichtung einwirkend, mechanisch gesperrt ist. Dies kann dadurch bewerkstelligt werden, dass eine Schüttelkraft mit einer solchen Richtung auf die Betätigungseinrichtung umgelenkt wird, dass diese orthogonal zu einer zum Beispiel linearen Verschieberichtung der Betätigungseinrichtung orientiert ist. Unter einer "Verschieberichtung" kann in diesem Zusammenhang eine Achse verstanden werden, entlang welcher die Betätigungseinrichtung durch einen Benutzer oder einen Roboter verschoben werden kann, wohingegen eine Verschiebung entlang anderer Achsen, insbesondere entlang einer zu der Verschieberichtung senkrechten Achse, unterbunden ist.

Insbesondere können die Betätigungseinrichtung und das Kraftübertragungselement derart mittels der zweiten Koppelstange gekoppelt sein, dass in dem die Probenträgerplatte in Eingriff nehmenden Betriebszustand die zweite Koppelstange die Schüttelkraft im Wesentlichen senkrecht zu einer Verschieberichtung der Betätigungseinrichtung einwirkt. Die zweite Koppelstange kann in unterschiedliche Orientierungen zu der Verschieberichtung der Betätigungseinrichtung gebracht werden. Bei einer winkeligen oder schrägen Stellung zwischen der zweiten Koppelstange und der Verschieberichtung kann zumindest eine von Null verschiedene Kraftkomponente in der Verschieberichtung wirken, so dass eine Kraftübertragung möglich ist. Bei einer orthogonalen oder zumindest im Wesentlichen orthogonalen (d.h. wenige Grad von einem rechten Winkel abweichenden) Stellung zwischen der zweiten Koppelstange und der Verschieberichtung kann keine (oder zumindest keine eine Haftreibung überwindende) Kraftkomponente in der Verschieberichtung wirken, so dass eine Kraftübertragung gesperrt ist. Eine solche Konfiguration ermöglicht es also, einerseits ein Einspannen der Probenträgerplatte mittels kraftarmen Betätigens der Betätigungseinrichtung zu ermöglichen, andererseits bei eingespannter Probenträgerplatte eine Rückübertragung einer Kraft, insbesondere ausgelöst durch eine Schüttelbewegung einer Schüttelplatte, auf die Betätigungseinrichtung zu inhibieren.

Ein exemplarisches Ausführungsbeispiel der Erfindung verbindet ein orbitales Mischen mittels magnetischer Führung mit einem zentrischen Klemmen einer Mikroplatte. Ein vorteilhafter Aspekt ist, dass das zentrische Klemmen in Verbindung mit dem Schütteln/Mischen vereint werden kann. Beim Schütteln sollte die Mikroplatte automatisch zentrisch geklemmt werden, um insbesondere für hohe Mischgeschwindigkeiten bzw. Schüttelgeschwindigkeiten die Mikrotiterplatte sicher zu halten, da die Mikrotiterplatte sich sonst unerwünscht von der Vorrichtung ablösen könnte. Der Schüttler selbst hält immer in seiner Nullposition an ,wobei die zentrische Klemmung die Mikrotiterplatte so präzise ausrichtet, dass eine hochgenaue Pipettierung in die Wells ermöglicht ist. Besonders bei 384- oder 1536-Well-Mikrotiterplatten und immer kleiner werdenden Well-Durchmessern ist dies ein wichtiges Erfordernis für eine automatische Pipettierung. Das automatische Öffnen erlaubt einerseits das Klemmen und andererseits die Freigabe der Platte für einen per Roboter-Greifer automatisch stattfindenden Wechsel der Mikrotiterplatte.

Im Folgenden werden exemplarische Ausführungsbeispiele der vorliegenden Erfindung mit Verweis auf die folgenden Figuren detailliert beschrieben.

Fig. 1 zeigt eine Draufsicht einer Positioniereinrichtung gemäß einem exemplarischen Ausführungsbeispiel der Erfindung in einem Betriebszustand, in dem eine nicht gezeigte Probenträgerplatte freigegeben ist.

Fig. 2 zeigt die Positioniereinrichtung aus Fig. 1 in einem anderen Betriebszustand, in dem die Probenträgerplatte (nicht gezeigt) von den Positionierecken in Eingriff genommen ist.

Fig. 3 zeigt eine Positionier- und Trägervorrichtung gemäß einem anderen exemplarischen Ausführungsbeispiel, auf der eine Mikrotiterplatte montiert ist.

Fig. 4 zeigt die Positioniervorrichtung gemäß Fig. 3 ohne Abdeckplatte und ohne Mikrotiterplatte.

Fig. 5 zeigt eine Anordnung ähnlich wie Fig. 4 in Draufsicht, bei der eine drehbar gelagerte Kupplungsscheibe, eine Vorspannfeder sowie eine Anzahl Koppelstangen zur besseren Sichtbarkeit weggelassen sind.

Fig. 6 zeigt die Vorrichtung aus Fig. 3 bis Fig. 5 in einem geschlossenen oder eine Mikrotiterplatte in Eingriff nehmenden Zustand.

Fig. 7 zeigt die Positioniervorrichtung gemäß Fig. 3 bis Fig. 6 in einem geöffneten oder eine Mikrotiterplatte freigebenden Zustand.

Fig. 8 zeigt eine Positioniervorrichtung gemäß einem anderen Ausführungsbeispiel der Erfindung ohne montierter Mikrotiterplatte und mit aufgesetzter Adapterplatte.

Fig. 9 zeigt die Positioniervorrichtung gemäß Fig. 8 in Draufsicht nach Abnahme der Adapterplatte.

Fig. 10 zeigt die Positioniervorrichtung gemäß Fig.

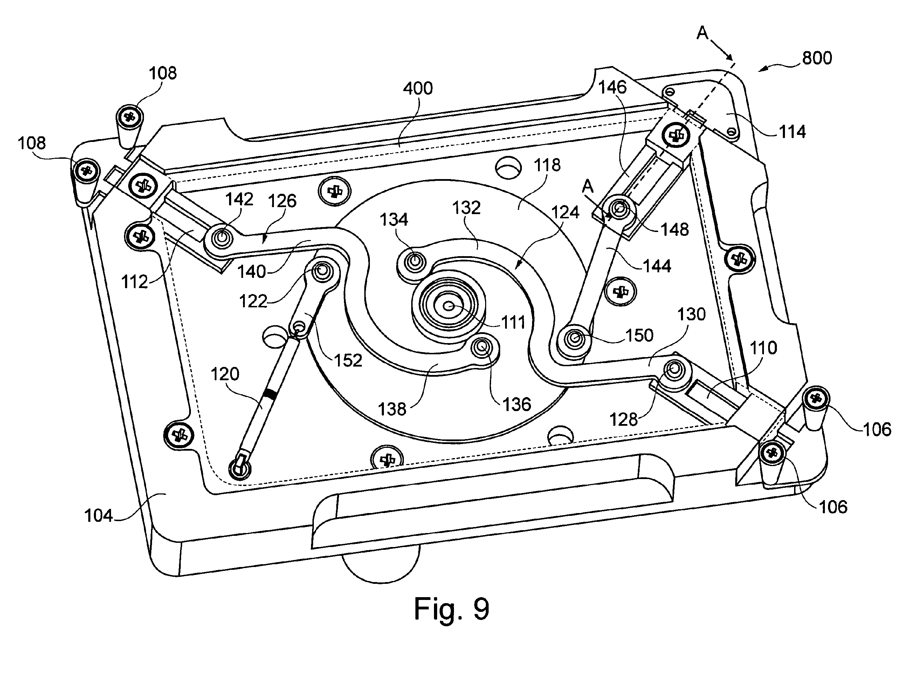

8 bzw. Fig. 9 in dem zu Fig. 9 alternativen Betriebszustand.

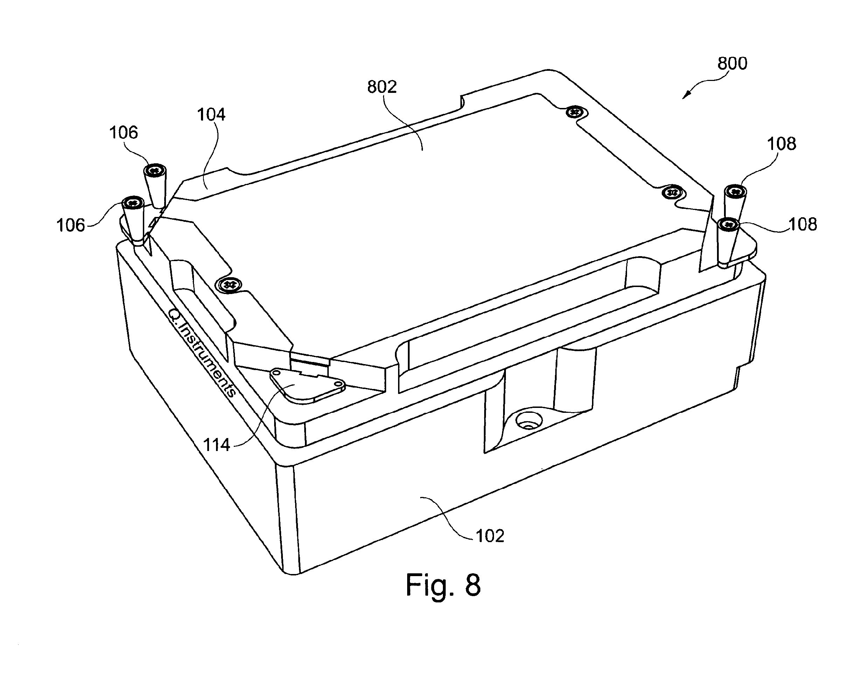

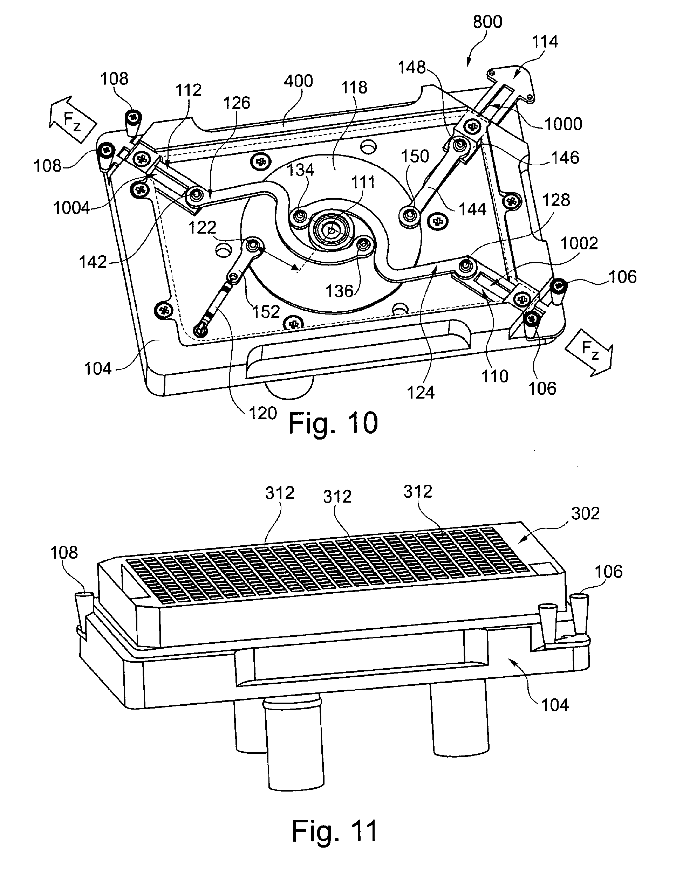

Fig. 11 zeigt die Positioniervorrichtung gemäß Fig. 8 bis Fig. 10 mit aufgesetzter Mikrotiterplatte.

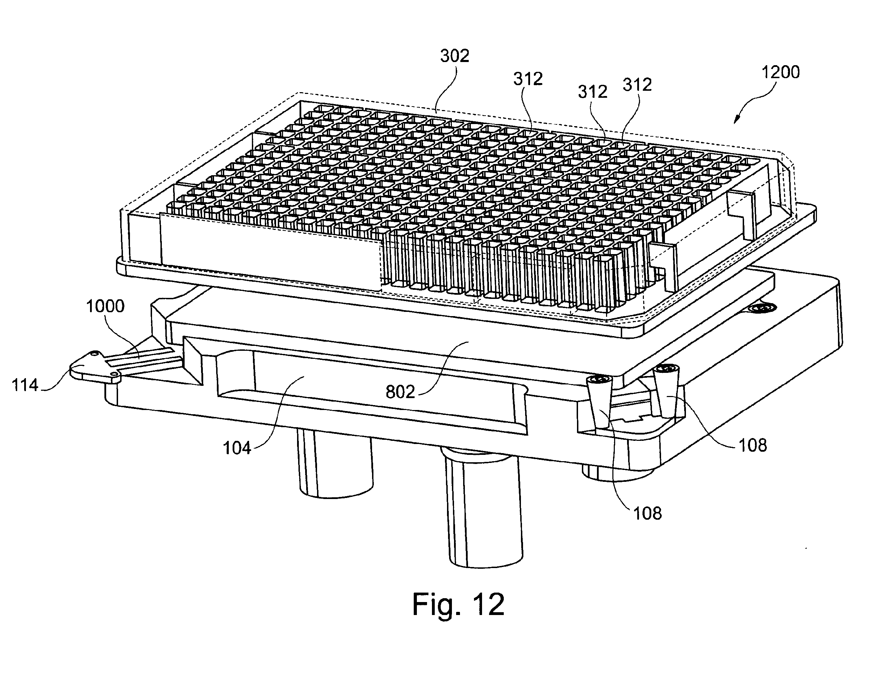

Fig. 12 zeigt eine Positioniervorrichtung gemäß noch einem anderen exemplarischen Ausführungsbeispiel der Erfindung mit einer Mikrotiterplatte.

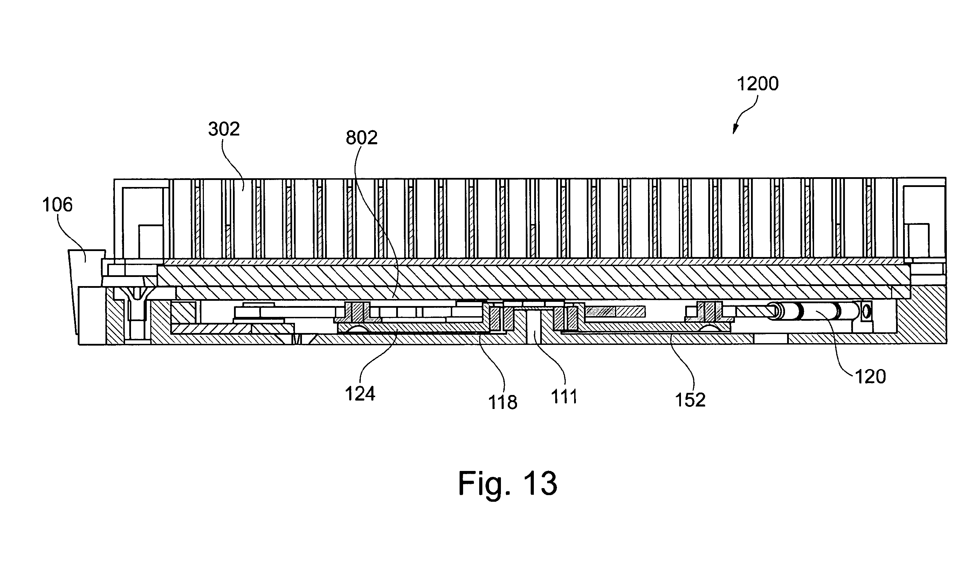

Fig. 13 zeigt einen Querschnitt durch ein Inneres eines Trägerkörpers der Positioniervorrichtung gemäß Fig. 12 und illustriert somit einen Schnitt durch einen Mechanismus mit einer eingesetzten Flachboden-Mikrotiterplatte.

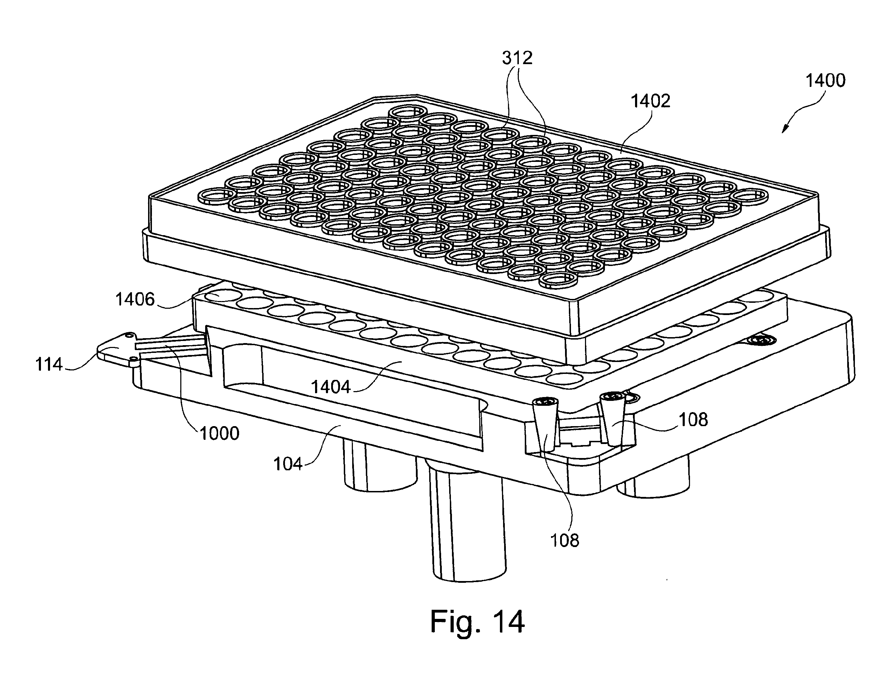

Fig. 14 zeigt die Positioniervorrichtung gemäß Fig. 12 und Fig. 13 und insbesondere einen Mechanismus mit einer Rundboden-Mikrotiterplatte und angepasster Adapterplatte.

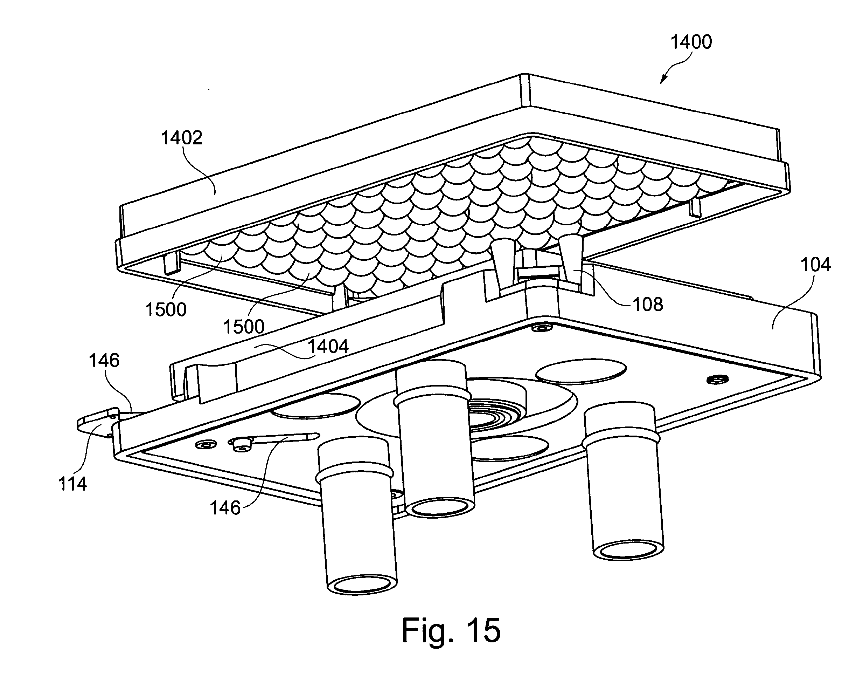

Fig. 15 zeigt einen Mechanismus mit Rundboden-Mikrotiterplatte und angepasster Adapterplatte von unten entsprechend der Positioniervorrichtung gemäß Fig. 12 bis Fig. 14.

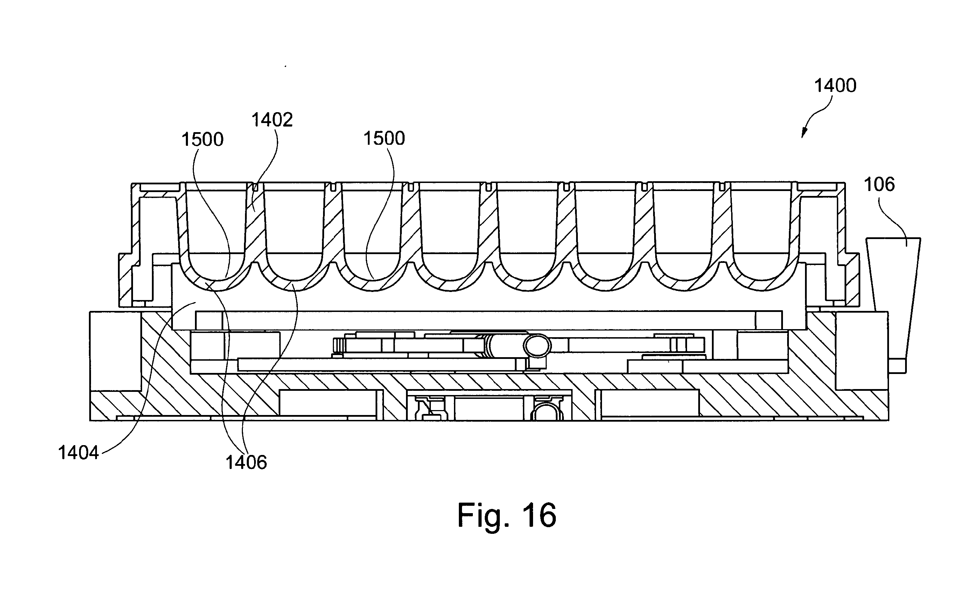

Fig. 16 zeigt einen Schnitt der Positioniervorrichtung gemäß Fig. 12 bis Fig. 15 durch einen Mechanismus mit eingesetzter Rundboden-Mikrotiterplatte.

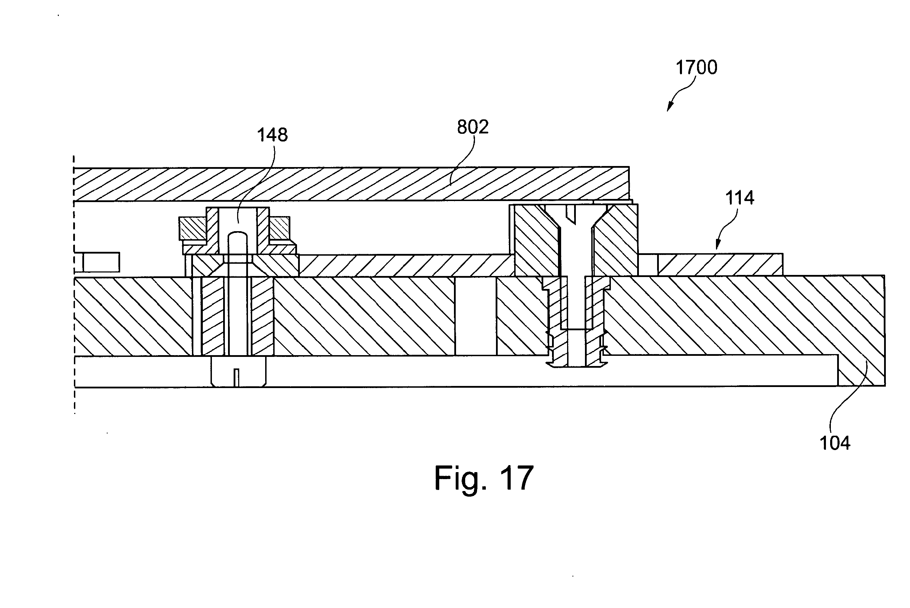

Fig. 17 zeigt einen Schnitt entlang der Schnittlinie A-A gemäß Fig. 9.

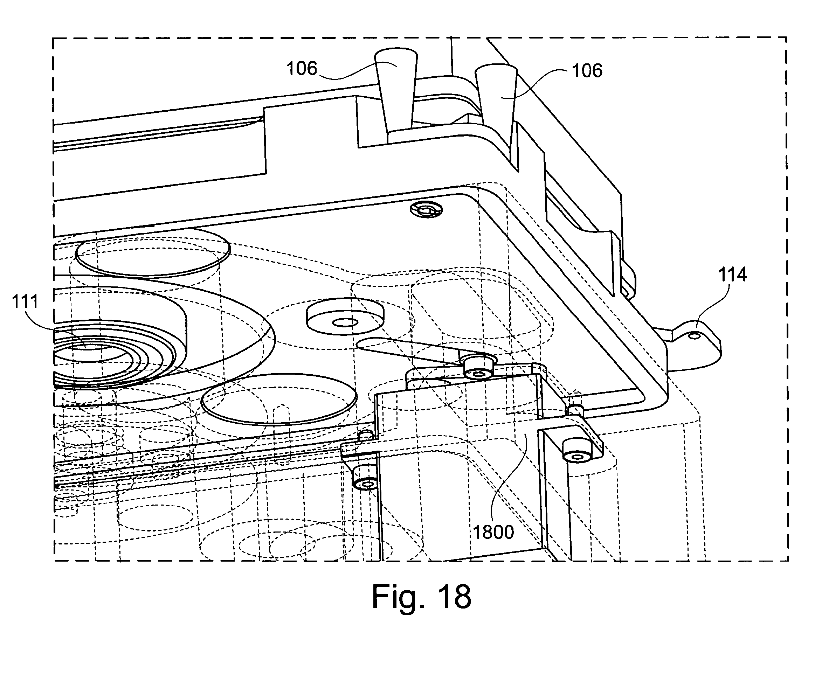

Fig. 18 zeigt eine Teilansicht der Positioniervorrichtung gemäß Fig. 12 bis Fig. 17, in dem die Stellung eines Servomotormechanismus geschlossen ist.

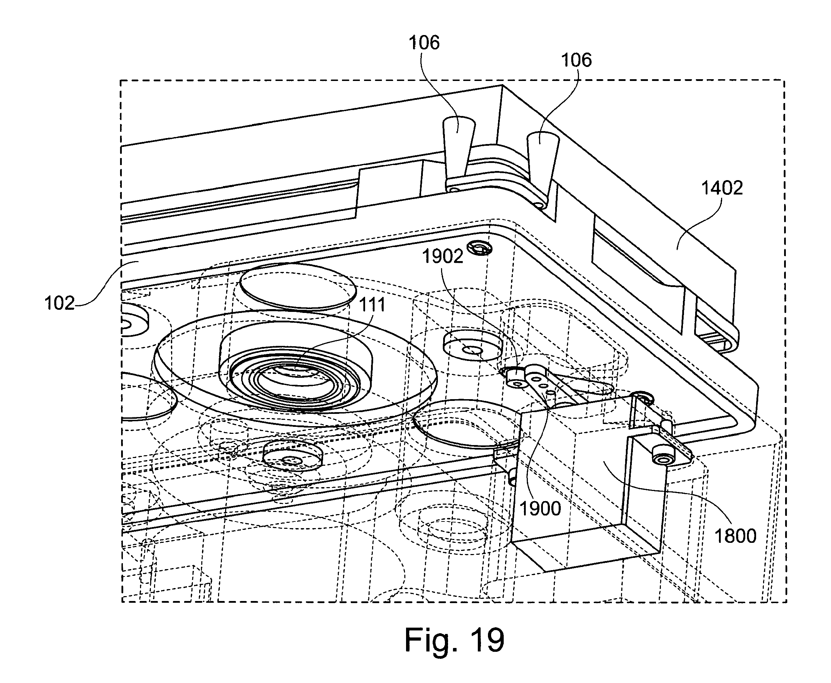

Fig. 19 zeigt die Stellung des Servomotormechanismus geöffnet, und

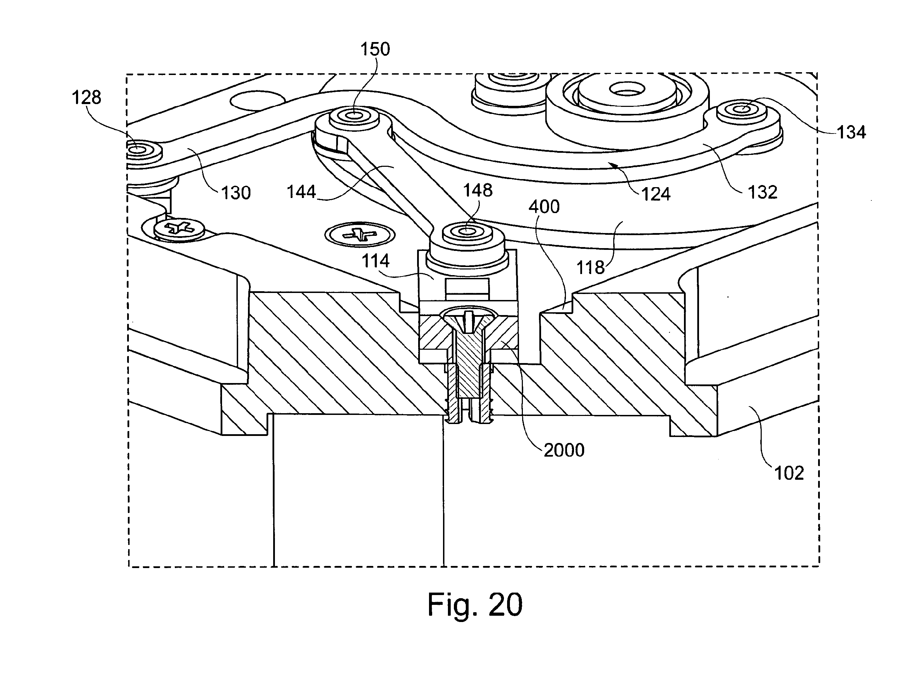

Fig. 20 zeigt eine Schnittansicht durch eine Linearführung des Mechanismus.

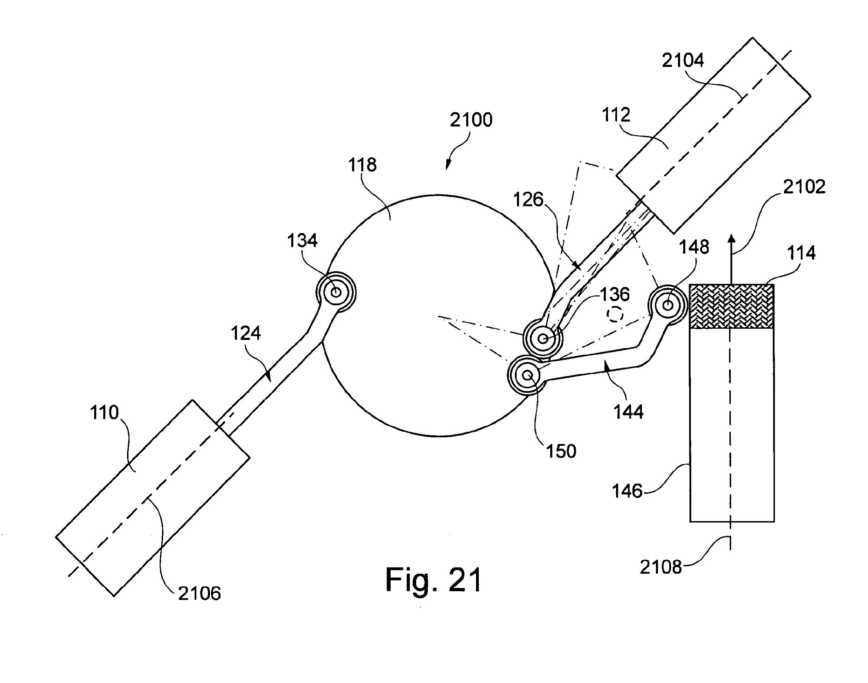

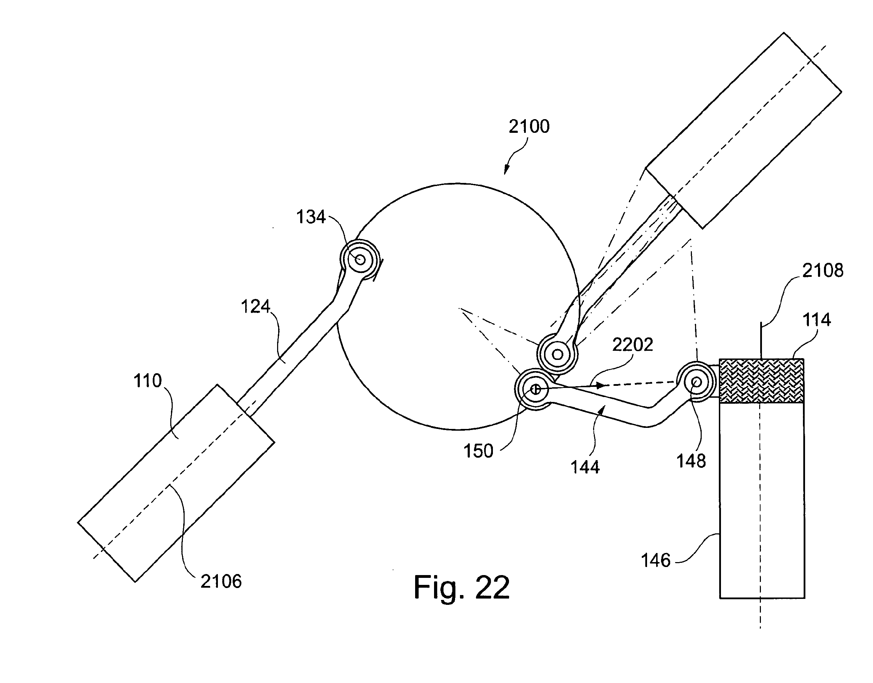

Fig. 21 und Fig. 22 zeigen in Draufsicht Prinzipdarstellungen einer Positioniereinrichtung gemäß einem exemplarischen Ausführungsbeispiel der Erfindung, wobei in einem in Fig. 21 gezeigten Betriebszustand durch Betätigung einer Betätigungseinrichtung eine Probenträgerplatte zwischen Positionieranschlägen eingespannt werden kann, und wobei in einem in Fig. 22 gezeigten Betriebszustand die Probenträgerplatte zwischen den Positionieranschlägen eingespannt geschüttelt wird, ohne dass die Schüttelkraft die Betätigungseinrichtung unerwünscht in Bewegung setzen würde.

Die Darstellungen in den Figuren sind schematisch und nicht maßstäblich.

Gleiche oder ähnliche Komponenten in unterschiedlichen Figuren sind mit gleichen Bezugsziffern versehen.

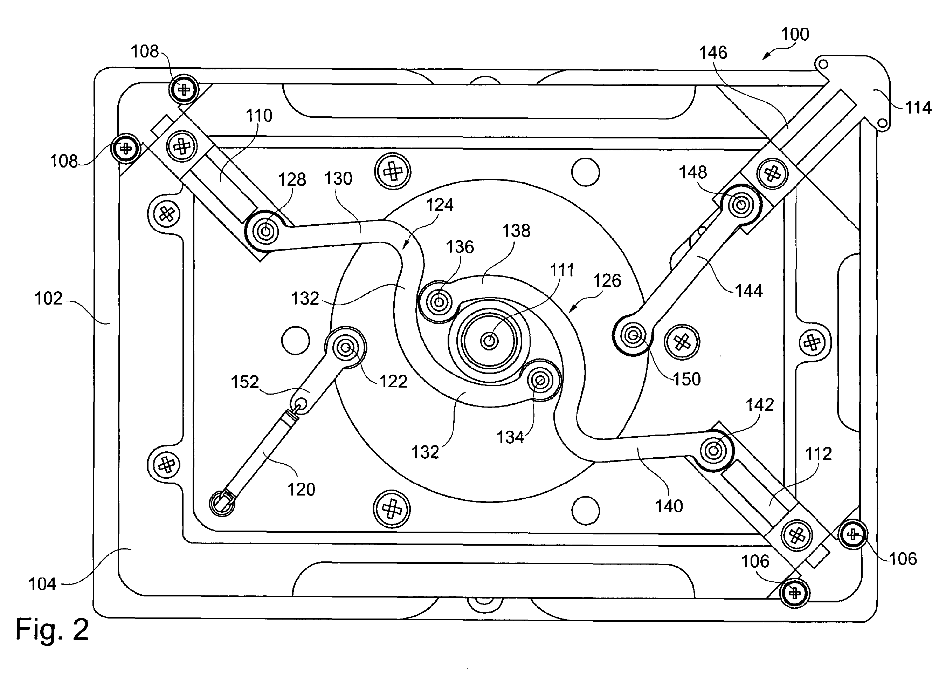

Im Weiteren wird Bezug nehmend auf **Fig. 1** und **Fig. 2** ein Probenhandhabungsgerät 100 gemäß einem exemplarischen Ausführungsbeispiel der Erfindung beschrieben.

Das Probenhandhabungsgerät 100 enthält einen in Draufsicht gezeigten rechteckigen Grundkörper 102 mit vier rechtwinkligen Eckbereichen. In einem Hohlraum in dem Grundkörper 102 ist als Erhöhung ein Träger 104 vorgesehen, in dem eine Mehrzahl unterschiedlicher Komponenten des Probenhandhabungsgeräts 100 untergebracht sind.

Der Grundkörper 102 kann den Träger 104 beinhalten. Grundkörper 102 und Träger 104 können als gemeinsames einstückiges Bauteil gebildet sein oder können als voneinander separierbare Komponenten gebildet sein. Der Grundkörper 102 kann ein feststehendes Grundgehäuse aufweisen, und der Träger 104 kann bewegbar montiert werden.

Nachdem der Träger 104 in dem Hohlraum des Grundkörpers 102 montiert ist, kann oberhalb des Trägers 104 und seitlich durch den Träger 104 des Grundkörpers 102 begrenzt noch eine Aussparung verbleiben, die mittels Einsetzens einer in Fig. 1 und Fig. 2 nicht gezeigten Adapterplatte (siehe zum Beispiel Fig. 8) abgedeckt werden kann.

Zwei erste und zusammenwirkende, als konische Stifte 108 ausgeführte Anschlagelemente sind in einem gemäß Fig. 1 oberen linken Eckbereich des Trägers 104 angeordnet. In einem gegenüberliegenden Eckbereich des Trägers 104 sind zwei zusammenwirkende, sich in die Papierebene von Fig. 1 hinein verjüngende zweite konische Positionierstifte 106 angebracht. Wie im Weiteren näher erläutert wird, dienen die Positionieranschläge 106, 108 dem Einspannen einer in Fig. 1 nicht gezeigten Probenträgerplatte, wie zum Beispiel einer Mikrotiterplatte.

Die ersten Positionieranschläge 108 sind funktionell mit einer ersten Linearführungseinrichtung 110 wirkgekoppelt. Anders ausgedrückt können bei Einwirken einer entsprechenden Kraft auf die ersten Positionieranschläge 108 diese in Richtung eines Zentrums 111 des Probenhandhabungsgeräts 100 hin verschoben werden, indem die ersten Positionieranschläge 108 in einer Nut der ersten Linearführungseinrichtung 110 gleiten.

Entsprechend können die zweiten Anschlagelemente 106 in einer zugeordneten Linearführungseinrichtung 112 gleiten, so dass diese entweder gemeinsam mit den ersten Positionieranschlägen 108 in Richtung des Zentrums 111 hin verschoben werden oder gemeinsam mit den ersten Positionieranschlägen 108 von dem Zentrum 111 weg, hin zu den entsprechenden Ecken des Trägers 104 gleiten.

In einem anderen Eckbereich des Trägers 104 ist eine Betätigungseinrichtung 114 untergebracht, die bei dem Ausführungsbeispiel gemäß Fig. 1 entweder von einem menschlichen Benutzer händisch bzw. manuell betätigt werden kann, indem ein dreieckförmiger Endabschnitt der Betätigungseinrichtung 114 in diagonaler Richtung bezüglich des Grundkörpers 102 verschoben wird. Alternativ kann der Antrieb unter Verwendung einer elektrischen Aktuatoreinrichtung erfolgen. Letztere wird unten detaillierter beschrieben.

Mittels Betätigens der Betätigungseinrichtung 114 können die Positionieranschläge 106, 108 jeweils gemeinsam zwischen einem die Probenträgerplatte in Eingriff nehmenden Betriebszustand und einem die Probenträgerplatte frei gebenden, d.h. diese nicht in Eingriff nehmenden, Betriebszustand übergeführt werden. Fig. 1 zeigt den freigegebenen Betriebszustand, bei dem die Positionieranschläge 106, 108 sehr weit in den Eckbereich des Trägers 104 hinein gedrängt sind. Fig. 2 dagegen zeigt den in Eingriff nehmenden Betriebszustand, in dem die Positionieranschläge 106, 108 näher bei dem Zentrum 111 des Trägers 104 angeordnet sind als gemäß Fig. 1.

Wie aus Fig. 1 zu erkennen ist, korrespondiert der freigegebene Betriebszustand mit einer Stellung der Betätigungseinrichtung 114 näher bezüglich des Zentrums 111 als in dem in Eingriff nehmenden Betriebszustand gemäß Fig. 2, bei dem der pfeilartige Endabschnitt der Betätigungseinrichtung 114 über den entsprechenden Eckbereich des Trägers 104 leicht hinaus steht.

In dem Zentrum 111 drehbar, d.h. rotationsfähig (siehe Bezugszeichen 116), gelagert ist eine Kreisscheibe 118 als Kraftübertragungselement vorgesehen, die eine Betätigungskraft von der Betätigungseinrichtung 114 auf die Positionieranschläge 106, 108 derart überträgt, dass mittels Verschiebens der Stellung des Betätigungselements 114 zwischen den in Fig. 1 und Fig. 2 gezeigten Positionen zwangsläufig eine Verschiebung der Positionierelemente 106, 108 nach innen (d.h. in Richtung des Zentrums 111) oder nach außen (d.h. weg von dem Zentrum 111) erfolgen kann.

Somit ist es mit dem Probenhandhabungsgerät 100 ermöglicht, dass eine Mikrotiterplatte mit im Wesentlichen rechteckförmigen Querschnitt auf dem zentralen Abschnitt des Trägers 104 aufgesetzt wird, und in zwei gegenüberliegenden Eckbereichen direkt an die Positionieranschläge 106, 108 angrenzt, wenn sich das System in dem geschlossenen Zustand gemäß Fig. 2 befindet. In dem offenen Zustand gemäß Fig. 1 bleibt ein Abstand zwischen den Positionieranschlägen 106, 108 und der Mikrotiterplatte.

Somit dient die beschriebene Kraftübertragungsmechanik einer Zentrierung der Mikrotiterplatte bezüglich des Mittelpunkts 111 des Trägers 104 oder eines fixen Punktes des Grundkörpers 102.

Wie in jedem der hier offenbarten Ausführungsbeispiele kann auch in dem in Fig. 1 gezeigten Probenhandhabungsgerät 100 eine optionale Schütteleinrichtung in dem Grundkörper 102 und Träger 104 integriert sein (nicht gezeigt), welche derart konfiguriert sein kann, dass die Mikrotiterplatte bei Aufnahme zwischen den Positionieranschlägen 106, 108 eine Orbitalbewegung durchführt und somit in Wells einer Mikrotiterplatte enthaltene Fluide (zum Beispiel eine Flüssigkeit und/oder ein Gas, wobei auch feste Bestandteile nicht ausgeschlossen sind) zuverlässig durchmischt werden können. Die Klemmwirkung der Positionieranschläge 106, 108 in der geschlossenen Stellung gemäß Fig. 2 kann selbst während einer solchen Orbitalbewegung die Mikrotiterplatte sicher und im Zeitmittel zentriert bezüglich des Zentrums 111 halten.

Der beschriebene Kraftübertragungsmechanismus wirkt mit einer als Vorspanneinrichtung dienenden Schraubenfeder 120 zusammen, die in dem verbleibenden Eckbereich des Grundkörpers 102 angeordnet ist (siehe Fig. 1 und Fig. 2). Somit ist in jedem Eckbereich des rechteckförmigen Trägers 104 entweder ein zugehöriger Positionieranschlag 106 oder 108 oder die Betätigungseinrichtung 114 oder die Feder 120 vorgesehen. Dies führt zu der in Fig. 1 gezeigten anschaulich X-förmigen Kraftübertragungsgeometrie, welche mit der drehfähig montierten Kraftübertragungsscheibe 118 als Mittler zusammenwirkt.

Die Schraubenfeder 120 kann derart vorgespannt sein, dass diese eine Zugvorspannung auf die drehbar gelagerte Kupplungsscheibe 118 überträgt. Ein Ende der Feder 120 ist an dem Träger 104 befestigt, wobei deren anderes Ende über eine Koppelstange 152 und über ein Verbindungselement 122 mit der Kupplungsscheibe 118 gekoppelt ist.

Das Probenhandhabungsgerät 100 weist gebogene Koppelstangen 124 und 126 auf. Die gebogene Koppelstange 124 koppelt die Positionieranschläge 108 mit der Kupplungsscheibe 118. Hierbei bewerkstelligt ein Verbindungselement 128 eine gelenkige Verbindung zwischen der Linearführungseinrichtung 110 und einem geradlinigen Abschnitt 130 der gebogenen Koppelstange 124. Ein im Wesentlichen halbkreisförmig gebogener Abschnitt 132 der Koppelstange 124 ist über ein Verbindungselement 134 mit der Kupplungsscheibe 118 gelenkig verbunden.

Ein Abstand $r_1$ zwischen dem Zentrum 111 und einem Zentrum des Verbindungselements 134 ist bei dem Ausführungsbeispiel gemäß Fig .1 als $r_1$ bezeichnet und gleicht einem Abstand $r_2$, den ein Verbindungselement 136 von dem Zentrum 111 beabstandet. Das Verbindungselement 136 verbindet einen gebogenen Endabschnitt 138 der gebogenen Koppelstange 126 gelenkig mit der Kreisscheibe 118. Auch die gebogene Koppelstange 126 enthält einen geraden Abschnitt 140, der über ein Verbindungselement 142 gelenkig mit der Linearführungseinrichtung 112 gekoppelt ist, welche den Positionieranschlägen 106 zugeordnet ist.

Eine geradlinig verlaufende Koppelstange 144 verbindet die Betätigungseinrichtung 114, genauer gesagt, eine Linearführungseinrichtung 146 der Betätigungseinrichtung 114, mit der drehbar gelagerten Kupplungsscheibe 118. Hierfür enthält die Koppelstange 144 ein Verbindungselement 148 zum gelenkigen Verbinden der Kopplungsstange 144 mit der Linearführungseinrichtung 146. Ein Verbindungselement 150 verbindet die Kopplungsstange 144 gelenkig mit der Kupplungsscheibe 118.

Schließlich ist die weitere Koppelstange 152 vorgesehen, welche die Schraubenfeder 120 mit der drehbar gelagerten Kupplungsscheibe 118 gelenkig koppelt.

Ein radialer Abstand zwischen dem Zentrum 111 und einem Zentrum des Verbindungselementes 150 ist mit $r_3$ bezeichnet, wohingegen ein radialer Abstand zwischen dem Zentrum 111 und dem Verbindungselement 122 mit $r_4$ bezeichnet ist. Bei der beschriebenen Ausführungsform gilt

$$r_1 = r_2, \; r_3 = r_4 \; \text{und} \; r_3 > r_1.$$

Damit ist ein günstiges Hebelsystem für die Kraftübertragung geschaffen.

In dem Ausführungsbeispiel gemäß Fig. 1 sind die Koppelstangen 124, 126, 152 und 144 als dünne aber starre Metallstreifen ausgeführt, die alle in derselben Ebene angeordnet sind, nämlich auf einer oberen kreisförmigen Deckfläche des dünnen scheibenförmigen Metallkörpers, welcher eine Koppelfläche der Kupplungsscheibe 118 bildet. Dadurch ist eine sehr platzsparende Flachbauweise ermöglicht.

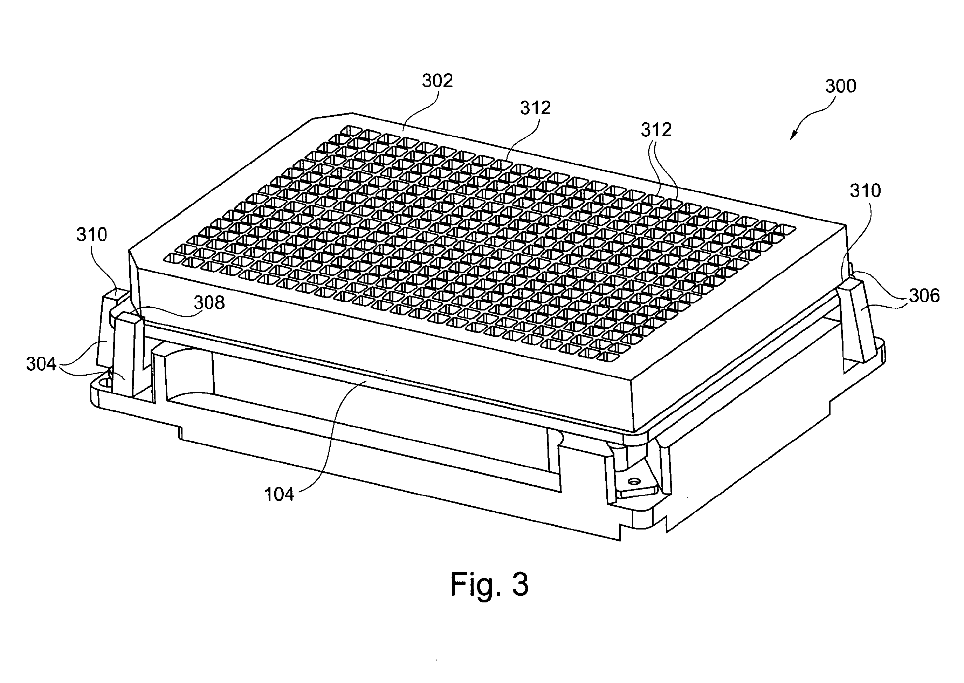

Fig. 3 zeigt eine dreidimensionale Ansicht eines Probenhandhabungsgeräts 300 gemäß einem anderen Ausführungsbeispiel der Erfindung.

Bei diesem Ausführungsbeispiel ist eine Mikrotiterplatte 302 auf dem Träger 104 aufgesetzt und seitlich fest gehalten. Dies wird gemäß dem Ausführungsbeispiel von Fig. 3 mittels Anschlagelementen 304 bzw. 306 in gegenüberliegenden Eckbereichen des Trägers 104 realisiert, die sich mit zueinander senkrecht angeordneten Anschlagslinien 308, 310 entlang einer zusammenhängenden Linie an Seitenwände der Mikrotiterplatte 302 anschmiegen. Die Mikrotiterplatte 302 enthält eine Mehrzahl von matrixförmig angeordneten Wells oder Probenaufnahmenäpfchen 312.

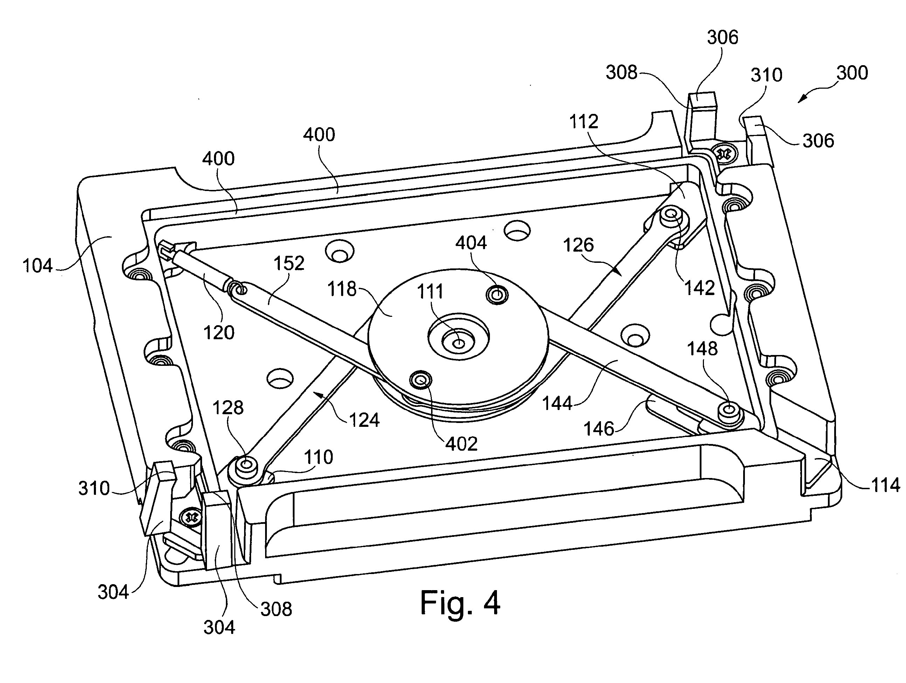

Fig. 4 zeigt eine Ansicht der Probenaufnahmevorrichtung 300, nachdem die Mikrotiterplatte 302 und eine in einem zentralen Bereich des Grundkörpers angeordnete Adapterplatte abgenommen worden sind. Diese Adapterplatte kann in einer Aussparung 400 formschlüssig montiert und zum Beispiel verschraubt werden, und kann mit einer Bodenfläche an einem ringartigen Bodenabschnitt in der Aussparung 400 gehalten werden und simultan mit Seitenflächen an einer umlaufenden Seitenwand der Aussparung 400 gehalten werden.

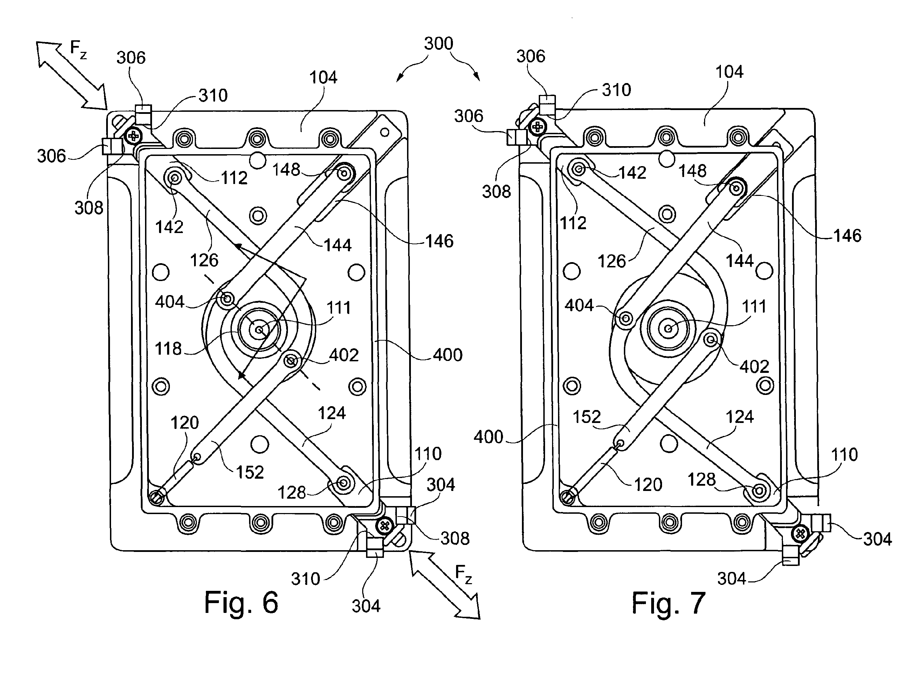

Im Unterschied zu dem Ausführungsbeispiel gemäß Fig. 1 und Fig. 2 sind bei dem Ausführungsbeispiel gemäß Fig. 4 die diversen Koppelstangen teilweise an gemeinsamen Stellen an der Kopplungsscheibe 118 angekoppelt, wie Bezug nehmend auf Fig. 6 und Fig. 7 näher beschrieben wird. Dort ist näher gezeigt, wie die Koppelstangen 152, 126 mittels eines Verbindungselements 402 sowie die Koppelstangen 144 und 124 mittels eines Verbindungselements 404 miteinander gelenkig verbunden sind.

Aufgrund dieser für jeweils zwei der Koppelstangen gemeinsamen Verbindungselemente 402, 404 sind die Koppelstangen nicht alle exakt in einer gemeinsamen Ebene verlegt, sondern in zwei aneinander angrenzenden oder benachbarten Ebenen. Die Koppelstangen 124, 126 sind gegenüber der Adapterfläche weiter unten in der Anordnung 300 angeordnet sind als die Koppelstangen 152, 144.

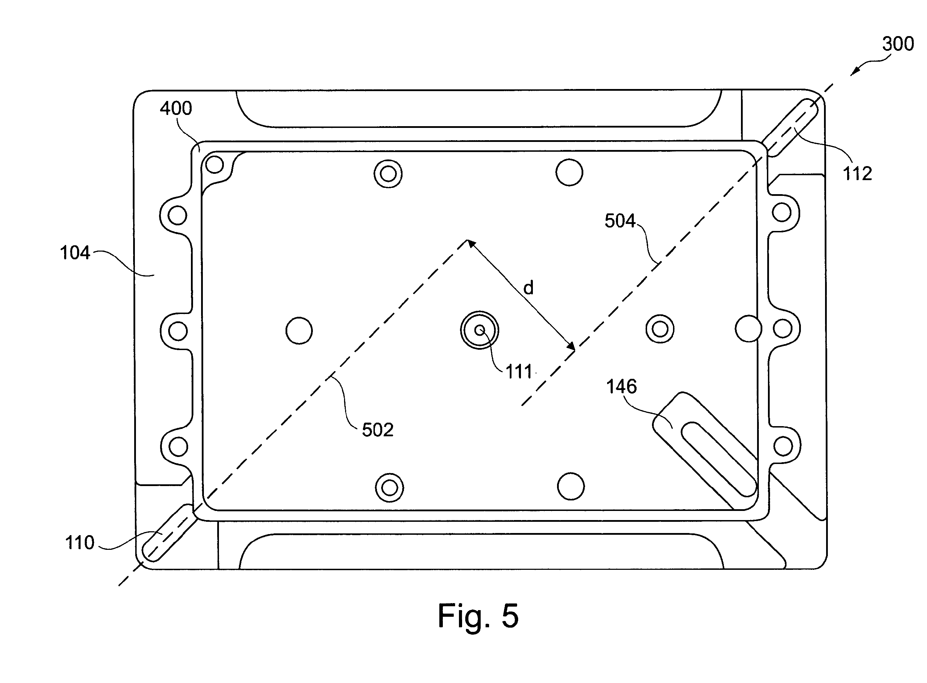

Fig. 5 illustriert für das Probenhandhabungsgerät 300 eine Ansicht, nachdem eine Reihe der in Fig. 4 gezeigten Komponenten abmontiert sind.

Fig. 5 ist insbesondere zu entnehmen, dass eine Fluchtlinie 502 der Führungsnut der Linearführungseinrichtung 110 parallel zu einer Fluchtlinie 504 des Langlochs der Linearführungseinrichtung 112 angeordnet ist. Beide Fluchtlinien 502 und 504 sind im Wesentlichen entlang einer Diagonalen des rechteckförmigen Trägers 104 und zueinander parallel angeordnet. Sie sind seitlich um einen Abstand d gegeneinander versetzt. Durch diese Geometrie ist eine besonders effiziente Kraftübertragung möglich.

Fig. 6 zeigt einen geschlossenen Zustand und Fig. 7 einen entriegelten Zustand des Probenhandhabungsgeräts 300 bezüglich der Mikrotiterplatte.

Im Weiteren wird eine Funktionsweise des Ausführungsbeispiels von Fig. 3 bis Fig. 7 noch einmal beschrieben.

In Fig. 3 ist die Mikrotiterplatte 302 dargestellt, die in der Positionierungsvorrichtung 300 eingesetzt ist. Fig. 4 zeigt den Mechanismus, der eine Positionierung und Fixierung der Mikrotiterplatte 302 mit dem Träger 104 ermöglicht, einer gegenüber dem Träger 104 über ein Lager drehbar gelagerten Scheibe 118. Weiterhin weist der Mechanismus eine am Träger befestigte Feder 120 und jeweils zwei gerade Koppelstangen 144, 152 und zwei teilweise gebogenen Koppelstangen 124, 126 auf. Die Koppelstangen sind an ihren Enden einseitig mit der Scheibe 118 gelenkig verbunden. An ihrer jeweils anderen Seite sind die Koppelstangen 124, 126, 144 gelenkig mit linear geführten Schiebern 110, 112, 146 verbunden. Die Koppelstange 152 ist mit der zweiten Seite mit dem Träger 104 über eine Feder 120 verbunden. Bezüglich der Art der Verbindung der gebogenen Koppelstangen 124, 126 und der Scheibe 118 siehe auch Fig. 6 und Fig. 7. Mit den zwei Schiebern 110, 112 sind jeweils die Positionierecken 304, 306 verbunden.

Fig. 5 zeigt den Aufbau eines Ausführungsbeispiels des Trägers 104. Dabei ist zu erkennen, dass die Schieber 110, 112, welche die Positionierecken 304, 306 tragen, jeweils in zwei Linearführungen geführt sind, die parallel zueinander ausgerichtet sind. An den Schiebern 110, 112 befindet sich an ihrer Unterseite eine Form, die in die Linearführungen hineinragt.

Wird der Schieber 114 manuell oder automatisch in der Linearführung 146 verschoben, dann überträgt sich diese Linearverschiebung über Koppelstange 144 auf die Scheibe 118, die entgegen der von der Feder 120 über Koppelstange 152 übertragenen Kraft bewegt wird, bis der Schieber 146 am Anschlag in der zugeordneten Führungsnut gestoppt wird. Dadurch werden über die Koppelstangen 124, 126 die Schieber mit den darauf befestigten Positionierstücken 304, 306 entlang der Führungen 110, 112 verschoben. In dieser Position kann die Mikrotiterplatte 302 in den Träger 104 eingesetzt werden. Bei Entlastung des Schiebers 146 wird die Scheibe 118 durch die Federkraft, die über Koppelstange 152 und Feder 120 wirkt, in die Ausgangsstellung verdreht, wodurch Schieber 110, 112 und Positionierstücke 304, 306 bis an den Rand des Sockels der Mikrotiterplatte 302 verschoben werden. Der geöffnete und geschlossene Zustand des Mechanismus ist in Fig. 6 bzw. Fig. 7 dargestellt.

Während einer orbitalen Schüttelbewegung wirkt auf die Mikrotiterplatte 300 und die enthaltenen Flüssigkeiten eine Zentrifugalkraft, deren Wirkrichtung umläuft. Da jedoch die Positionierstücke 304, 306 auf den Schiebern 110, 112 linear geführt sind, ergibt sich nur ein möglicher Freiheitsgrad der Bewegung aufgrund der Zentrifugalkraft, der in Fig. 6 durch die eingezeichneten Pfeile dargestellt ist.

Eine grundlegende Verbesserung des Mechanismus gegenüber herkömmlichen Systemen ist, dass der Anlenkungspunkt der Koppelstangen 124, 126 an der drehbar gelagerten Scheibe 118 im geschlossenen Zustand so positioniert ist, dass sich bezüglich des Drehpunktes der Scheibe 118 ein sehr geringer wirksamer Hebelarm, im Idealzustand Hebelarm = 0, ergibt. Daraus resultiert, dass durch die Zentrifugalkraft ein sehr geringes Drehmoment auf Scheibe 118 ausgeübt wird, während der wirksame Hebelarm der vorgespannten Feder 120 auf die Scheibe 118 groß ist und in diesem Ausführungsbeispiel dem Teilkreisradius seiner Anlenkung entspricht.

Es ergibt sich dadurch insbesondere der Vorteil, mit einer relativ geringen Federkraft eine sehr steife Verbindung von Positionierstück 304, 306 und Mikrotiterplatte 302 zu realisieren. Trotz dieser steifen Verbindung ist im geöffneten Zustand eine kraftlose Bestückung des Mechanismus mit der Mikrotiterplatte 302 möglich. Ein weiterer Vorteil dieses Mechanismus liegt in der Zentrierung der Mikrotiterplatte 302 bezüglich des Trägers 104. Die Fertigungstoleranzen von Länge und Breite der Mikrotiterplatten 302 wirkt sich damit nicht auf die Lage der Kavitäten bezüglich der Mitte des Trägers 104 aus.

Fig. 8 zeigt ein Probenhandhabungsgerät 800 gemäß einem anderen exemplarischen Ausführungsbeispiel der Erfindung, bei dem eine Adapterplatte 802 in die Aussparung 400 eingesetzt ist.

Wie Fig. 8 zeigt, schließt die Adapterplatte 800 plan mit einem angrenzenden Oberflächenbereich des Trägers 104 ab.

Fig. 9 zeigt das Probenhandhabungsgerät 800 nach Abnahme der Adapterplatte 802, in die zum Beispiel eine Temperiereinheit zum Temperieren einer Mikrotiterplatte eingebracht sein kann (nicht gezeigt).

Fig. 9 zeigt den nicht in Eingriff nehmenden, und Fig. 10 zeigt den in Eingriff nehmenden Betriebszustand des Probenhandhabungsgeräts 800.

In Fig. 11 ist die Mikrotiterplatte 302 auf der Adapterplatte 802 aufgenommen.

Im Weiteren wird eine Funktionsweise des Ausführungsbeispiels von Fig. 8 bis Fig. 11 noch einmal beschrieben.

In Fig. 11 ist eine Mikrotiterplatte 302 dargestellt, die in der Positionierungsvorrichtung 800 eingesetzt ist. Weiterhin ist in Fig. 8 bis Fig. 11 der Mechanismus dargestellt, der eine Positionierung und Fixierung der Mikrotiterplatte 302 ermöglicht. Diese besteht aus einer Trägerplatte, einer gegenüber dem Träger über das Lager 112 drehbar gelagerten Scheibe 118. Weiterhin besteht der Mechanismus aus einer am Träger befestigten Feder 120 und jeweils zwei geraden Koppelstangen 144, 152 und zwei gebogenen Koppelstangen 124, 126. Die Koppelstangen sind an ihren Enden einseitig mit der Scheibe 118 gelenkig verbunden. An ihrer jeweils anderen Seite sind die Koppelstangen 124, 126, 144 gelenkig mit linear geführten Schiebern 110, 112, 146 verbunden. Die Linearführung wird über T-Nutensteine (zugehörige Führungsschlitze 1002 und 1004 sind in Fig. 10 gezeigt) realisiert. Die Koppelstange 152 ist mit der zweiten Seite mit dem Träger über eine Feder 120 verbunden. Auf den zwei Schiebern 110, 112 sind jeweils zwei konische Stifte 106, 108 angebracht, durch die die Mikrotiterplatte 302 kraftschlüssig zentriert und fixiert wird. Wird der Schieber 114 manuell oder automatisch linear verschoben, dann überträgt sich diese Linearverschiebung über Koppelstange 144 auf die Scheibe 118, die entgegen der von der Feder 120 über Koppelstange 152 übertragenen Kraft bewegt wird, bis der Schieber 114 an einem Anschlag in der Führungsnut 1000 gestoppt wird. Dadurch werden über die Koppelstangen 124, 126 die Schieber 110, 112 mit den darauf befestigten Positionierstücken 106, 108 entlang der Führungen 1002, 1004 verschoben. In dieser Position kann die Mikrotiterplatte 302 in den Mechanismus eingesetzt werden. Bei Entlastung des Schiebers 114 wird die Scheibe 118 durch die Federkraft, die über Koppelstange 152 und Feder 120 wirkt, in die Ausgangsstellung verdreht, wodurch Schieber 110, 112 und darauf angebrachte konische Stifte 106, 108 bis an den Rand des Sockels der Mikrotiterplatte 302 verschoben werden. Der geöffnete Zustand ist in Fig. 9 und der geschlossene Zustand des Mechanismus ist in Fig. 10 dargestellt.

Während einer orbitalen Schüttelbewegung wirkt auf die Mikrotiterplatte 302 und die enthaltenen Flüssigkeiten eine Zentrifugalkraft, deren Wirkrichtung umläuft. Da jedoch die konischen Stifte 106, 108 auf den Schiebern 110, 112 linear geführt sind, ergibt sich nur ein möglicher Freiheitsgrad der Bewegung aufgrund der Zentrifugalkraft. Eine Verbesserung des Mechanismus gegenüber herkömmlichen Systemen ist, dass der Anlenkungspunkt der Koppelstangen 124, 126 an der drehbar gelagerten Scheibe 118 im geschlossenen Zustand so positioniert ist, dass sich bezüglich des Drehpunktes der Scheibe 118 ein sehr geringer wirksamer Hebelarm, im Idealzustand Hebelarm = 0, ergibt. Daraus resultiert, dass durch die Zentrifugalkraft ein sehr geringes Drehmoment auf Scheibe 118 ausgeübt wird, während der wirksame Hebelarm der vorgespannten Feder 120 auf die Scheibe 118 groß ist. Daraus ergibt sich der Vorteil, mit einer relativ geringen Federkraft eine sehr steife Verbindung von Positionierstiften 106, 108 und Mikrotiterplatte 302 zu realisieren. Trotz dieser steifen Verbindung ist im geöffneten Zustand eine kraftlose Bestückung des Mechanismus mit der Mikrotiterplatte möglich. Ein weiterer Vorteil dieses Mechanismus liegt in der Zentrierung der Mikrotiterplatte 302 bezüglich des Trägers. Die Fertigungstoleranzen von Länge und Breite der Mikrotiterplatten 302 wirkt sich damit nicht auf die Lage der Kavitäten bezüglich der Mitte des Trägers aus.

Eine Verbesserung ist es, dass nun alle Elemente in einer Ebene liegen und dadurch die Bauhöhe des Mechanismus wesentlich verringert wird. Außerdem ist es durch die konischen Stifte 106, 108 relativ einfach möglich, den Mechanismus an andere Aufgaben und Geometrien anzupassen.

**Fig. 12** zeigt ein Probenhandhabungsgerät 1200 gemäß noch einem anderen exemplarischen Ausführungsbeispiel der Erfindung. **Fig. 13** zeigt einen Schnitt durch den zugrundeliegenden Mechanismus mit eingesetzter Flachboden-Mikrotiterplatte 302.

**Fig. 14** zeigt ein Probenhandhabungsgerät 1400 gemäß noch einem anderen Ausführungsbeispiel der Erfindung, bei dem eine Mikrotiterplatte 1402 mit einer strukturierten Unterseite (siehe Fig. 15) auf eine korrespondierend gestaltete Adapterplatte 1404 aufgesetzt ist.

Entsprechend ist eine Oberseite der Adapterplatte 1404 gemäß Fig. 14 mit einer Topographie versehen, so dass Überstände 1500 an der Unterseite der Mikrotiterplatte 1402 in Wells 1406 der Adapterplatte 1404 formflüssig eingreifen können.

**Fig. 16** zeigt eine Ansicht, in der die Rundbogen-Mikrotiterplatte 1402 auf die Adapterfläche 1404 formflüssig aufgesetzt ist.

Wiederum Bezug nehmend auf Fig. 9 ist dort eine Schnittlinie A-A gezeigt, entlang welcher der in **Fig. 17** illustrierte Schnitt 1700 gezeigt ist. Aus Fig. 17 ist auch die Konfiguration des Betätigungselements 114 näher ersichtlich.

**Fig. 18** veranschaulicht eine Stellung eines Servomotormechanismus in einem geschlossenen Zustand, wohingegen Fig. 19 entsprechendes für einen offenen Zustand zeigt. Dieser Servo ist durch Bezugszeichen 1800 gekennzeichnet.

**Fig. 19** zeigt einen Hebelarm 1900, der gegen einen Stift oder Schraubenkopf 1902 drückt. Die lineare Führung der Schieber 114 erfolgt über eine Nut in diesen Schiebern unter Einsatz eines Nutensteins 2000, der in **Fig. 20** gezeigt ist.

Im Weiteren wird eine Funktionsweise der Ausführungsbeispiele von Fig. 12 bis Fig. 20 noch einmal beschrieben.

In Fig. 12 ist eine Mikrotiterplatte 302 mit flachem Boden dargestellt. Fig. 13 zeigt einen Schnitt durch den Mechanismus mit eingesetzter Flachboden-Mikrotiterplatte 1402. Die Adapterplatte 802, die eine Temperierung der Mikrotiterplatte 1402 ermöglicht, fixiert die Mikrotiterplatte 1402 ausschließlich vertikal. Horizontal bleibt die Mikrotiterplatte 1402 dabei ohne Einwirkung der Positionierstücke 106, 108 beweglich.

Fig. 14 zeigt den Mechanismus mit einer Mikrotiterplatte mit Rundboden und einer an diese Form abgepassten Adapterplatte 1404. Fig. 15 zeigt die Form des Bodens der Mikrotiterplatte 1402. In Fig. 16 ist ein Schnitt durch den Mechanismus mit eingesetzter Mikrotiterplatte 1402 dargestellt. Dabei ist ersichtlich, dass im Fall der Verwendung einer Mikrotiterplatte mit profiliertem Boden auch ohne Einwirkung der Positionierstücke 106, 108 eine gewisse horizontale Sicherung der Mikrotiterplatte 1402 erfolgt.

Die Betätigung des Mechanismus erfolgt entweder manuell durch Betätigung des Schiebers 114 oder durch einen elektrischen Aktor. Dieser Sachverhalt ist in den Fig. 18 bis Fig. 20 dargestellt. Die automatisierte Betätigung kann durch einen Servo 1800 realisiert sein, an dessen Welle ein Hebelarm 1900 angebracht ist, der gegen einen Stift oder hier Schraubenkopf 1902 drückt. Dadurch wird dieser innerhalb der Nut verschoben und damit der Mechanismus geöffnet. Im geschlossenen Zustand berühren sich Hebelarm 1900 und Schraubenkopf 1902 nicht. Der Schraubenkopf ist über ein Gewinde und ein Gelenk mit dem Schieber 114 verbunden.

Die lineare Führung der drei Schieber erfolgt über eine Nut in diesen Schiebern und einem Nutenstein 2000. In Fig. 20 ist die Funktionsweise am Beispiel eines Schiebers dargestellt. Die Linearführung der anderen Schieber funktioniert analog.

Die Befestigung der konischen Stifte 106, 108 auf den Schiebern erfolgt durch Verschrauben. Dadurch können diese Elemente vom Benutzer auf besonders einfache Art getauscht werden. Damit kann der Mechanismus an andere Geometrien und abweichende Sockelhöhen der Mikrotiterplatte schnell und unkompliziert angepasst werden.

**Fig. 21** und **Fig. 22** zeigen in Draufsicht Prinzipdarstellungen einer Positioniereinrichtung 2100 gemäß einem exemplarischen Ausführungsbeispiel der Erfindung. Die Anordnung kann ähnlich wie in Fig. 1 gezeigt ausgestaltet sein, so dass in Fig. 21 und in Fig. 22 nur die für die Erläuterung des Funktionsprinzips einer Bewegungssperre zum Unterbinden einer Bewegung einer Betätigungseinrichtung 114 infolge eines Schüttelns einer Probenträgerplatte relevanten Komponenten dargestellt sind. Wenn sich die Positionieranschläge in gegenüberliegenden Eckbereichen der Positioniereinrichtung 2100 befinden, sind gegenüber der schematischen Darstellung in Fig. 21 und Fig. 22 die entsprechenden Kräfte zum Beispiel mittels Verwendens entsprechender Koppelstangengeometrien passend umzulenken.

In einem in Fig. 21 gezeigten Betriebszustand wird durch Betätigung des Betätigungselements 114 eine nicht gezeigte Probenträgerplatte zwischen nicht gezeigten Positionieranschlägen eingelegt. Wird das Betätigungselement 114 in Richtung eines Pfeils 2102 gemäß Fig. 21 nach oben geschoben, wird dadurch die Koppelstange 144 gekippt, was zu einer Verdrehung der Kraftübertragungsscheibe 118 führt. Dadurch werden auch die Koppelstangen 124, 126 verdreht, womit Schieber der Linearverschiebeeinrichtungen 110, 112 entlang Linearverschieberichtungen 2104, 2106 verschoben und folglich Positionieranschläge nach außen gedrückt werden.

In einem in Fig. 22 gezeigten Betriebszustand ist die Probenträgerplatte bereits zwischen den Positionieranschlägen eingespannt und wird mittels einer Schütteleinrichtung (nicht gezeigt) geschüttelt, ohne dass die Schüttelkraft die Betätigungseinrichtung 114 unerwünscht in Bewegung setzt. Dies erfolgt unter Einsatz eines Kraftübertragungsmechanismus, der im Weiteren beschrieben wird.

Das Betätigungselement 114 und die als Kraftübertragungselement fungierende Kraftübertragungsscheibe 118 sind mittels der Kopplungsstange 144 derart gekoppelt, dass eine Schüttelkraft der Schütteleinrichtung derart auf das Betätigungselement 114 übertragen wird, dass das Betätigungselement 114 trotz Einwirkens der übertragenen Schüttelkraft in der Ruhestellung gemäß Fig. 22 verbleibt, sich also nicht gemäß Fig. 22 nach oben oder unten bewegt. Das Betätigungselement 114 und die Kraftübertragungsscheibe 118 sind mittels der Koppelstange 144 derart gekoppelt, dass in dem Betriebszustand gemäß Fig. 22 die Koppelstange 144 die Schüttelkraft, vergleiche Bezugszeichen 2202, senkrecht zu einer Verschieberichtung 2108 des Betätigungselements 114 einkoppelt.

Bei einer orthogonalen Stellung zwischen der Koppelstange 144 und der Verschieberichtung 2108 gemäß Fig. 22 kann keine Schüttelkraftkomponente zu einer Bewegung der Betätigungseinrichtung 114 führen, so dass diese Art der Kraftübertragung die Bewegung vorteilhaft sperrt. In der anderen Kraftübertragungsrichtung, das heißt von der Betätigungseinrichtung 114 zu den Linearführungseinrichtungen 110, 112 kann dagegen eine zu einer Bewegung führende Kraftübertragung erfolgen, da die Koppelstangen 124, 126 nicht-senkrecht (sondern sogar annähernd parallel) zu den Linearverschieberichtungen 2104, 2106 stehen.

Im geschlossenen Zustand ist gemäß Fig. 22 ein Winkel von fast 90° zwischen eingekoppelter Schüttelkraft 2202 und Verschieberichtung 2108 erreichbar. Das System ist dann so gut verklemmt, dass Federn auch weggelassen werden könnten. Das System ist fast nicht über die Ecken aufschiebbar und hält auch sehr hohen Schütteldrehzahlen zuverlässig stand.

Ergänzend ist darauf hinzuweisen, dass "aufweisend" keine anderen Elemente oder Schritte ausschließt und "eine" oder "ein" keine Vielzahl ausschließt. Bezugszeichen in den Ansprüchen sind nicht als Einschränkung anzusehen.

**Patentansprüche**

1.  Vorrichtung zum Positionieren einer Probenträgerplatte, wobei die Vorrichtung aufweist:

    einen Grundköper (102) zum Aufnehmen der Probenträgerplatte;
    in diagonal gegenüberliegenden ersten Eckbereichen des Grundkörpers (102) angeordnete Positionieranschläge (106, 108), die zum Einspannen der Probenträgerplatte vorgespannt und verschiebbar gelagert sind;
    eine in einem zweiten Eckbereich des Grundkörpers (102) angeordnete Betätigungseinrichtung (114), die derart eingerichtet ist, dass mittels Betätigens der Betätigungseinrichtung (114) die Positionieranschläge (106, 108) zwischen einem die Probenträgerplatte in Eingriff nehmenden Betriebszustand und einem die Probenträgerplatte freigebenden Betriebszustand überführbar sind;
    ein Kraftübertragungselement, das zum Übertragen einer Betätigungskraft von der Betätigungseinrichtung (114) auf die Positionieranschläge (106, 108) eingerichtet ist;
    wobei das Kraftübertragungselement eine drehbar gelagerte Kupplungsscheibe (118) aufweist, eine Koppelstange (144), mittels welcher die Betätigungseinrichtung (114) mit der drehbar gelagerten Kupplungsscheibe (118) gekoppelt ist, wobei die Kupplungsscheibe (118) mechanisch mit der Betätigungseinrichtung (114) und den Positionieranschlägen (106, 108) gekoppelt ist;
    wobei die Koppelstange (144) mit der drehbar gelagerten Kupplungsscheibe (118) gelenkig verbunden und mit der Betätigungseinrichtung (114) mittels einer Linearführung (146) gelenkig verbunden ist;
    wobei der zweite Eckbereich des Grundkörpers (102) von den ersten Eckbereichen des Grundkörpers (102) verschieden ist;
    wobei zwei von vier Ecken der im Wesentlichen rechteckförmigen Vorrichtung mit den Positionieranschlägen (106, 108) und eine andere der vier Ecken mit der Betätigungseinrichtung (114) als funktionelle Komponenten versehen sind.

2. Vorrichtung nach Anspruch 1, wobei die Positionieranschläge (106, 108) ausschließlich an zwei gegenüberliegenden ersten Eckbereichen des Grundkörpers (102) angeordnet sind und/oder wobei die Positionieranschläge (106, 108) in jedem ersten Eckbereich mittels zweier Anschlagelemente (106, 108, 304, 306) mit zueinander senkrechten Anschlaglinien zum Anlegen an eine rechteckige Probenträgerplatte gebildet sind und/oder wobei die Positionieranschläge (106, 108) in jedem ersten Eckbereich mittels zweier Anschlagelemente (106, 108, 304, 306) mit rundem Querschnitt zum Anlegen an die Probenträgerplatte gebildet sind, wobei optional die Anschlagelemente (106, 108, 304, 306) als kreiszylindrische Stifte, als konische Stifte, als Stifte mit einem kreiszylindrischen Abschnitt und einem konischen Abschnitt, als Stifte mit einer Mehrzahl von daran angebrachten Ringen unterschiedlichen Außendurchmessers, oder als Stifte mit einer Mehrzahl von daran integral geformten Stufen unterschiedlichen Außendurchmessers gebildet sind.

3. Vorrichtung nach Anspruch 1 oder 2, wobei jedem der Positionieranschläge (106, 108) ein erstes Linearführungselement (110, 112) zugeordnet ist, in dem der jeweilige Positionieranschlag (106, 108) linear verschiebbar gelagert ist, wobei optional die ersten Linearführungselemente (110, 112) so orientiert sind, dass die Positionieranschläge (106, 108) parallel zueinander verschiebbar gelagert sind, wobei ferner optional die ersten Linearführungselemente (110, 112) eingerichtet sind, dass die Positionieranschläge (106, 108) parallel versetzt zu einer Diagonale des Grundkörpers (102) verschiebbar gelagert sind.

4. Vorrichtung nach einem der Ansprüche 1 bis 3, wobei die Betätigungseinrichtung (114) einen Schieber zum manuellen Betätigen durch einen Benutzer aufweist, wobei optional der Schieber ein Griffstück mit pfeilförmigem Endabschnitt aufweist.

5. Vorrichtung nach einem der Ansprüche 1 bis 4, wobei die Betätigungseinrichtung (114) ein Kupplungsstück zum Kuppeln mit einer elektrischen Aktuatoreinrichtung aufweist, ferner optional aufweisend die elektrische Aktuatoreinrichtung, die zum Übertragen einer elektrischen Betätigungskraft auf das Kraftübertragungselement in das Kupplungsstück eingreift, wobei optional die elektrische Aktuatoreinrichtung eine Antriebswelle und einen daran angeordneten Hebelarm aufweist, der zum Übertragen der elektrischen Betätigungskraft auf einen Kraftübertragungsstift einwirkt, der in einer Linearführungsnut des Betätigungselements beweglich angeordnet ist.

6. Vorrichtung nach einem der Ansprüche 1 bis 5, ferner aufweisend eine elektrisch steuerbare Pipettiereinrichtung, die zum Pipettieren eines Fluids in Kavitäten der Probenträgerplatte eingerichtet ist und/oder ferner aufweisend eine Schütteleinrichtung, die zum Schütteln der auf dem Grundköper (102) montierten Probenträgerplatte eingerichtet ist, wobei optional die Schütteleinrichtung zum Beaufschlagen der Probenträgerplatte mit einer Orbitalbewegung eingerichtet ist.

7. Vorrichtung nach einem der Ansprüche 1 bis 6, ferner aufweisend eine in oder benachbart zu einem dritten Eckbereich des Grundkörpers (102) angeordnete Vorspanneinrichtung, die zum Übertragen einer Vorspannung, insbesondere einer Zugvorspannung, auf das Kraftübertragungselement eingerichtet ist, wobei optional die Vorspanneinrichtung eine Feder (120) aufweist, deren eines Ende an dem Grundköper (102) befestigt ist und deren anderes Ende mit dem Kraftübertragungselement gekoppelt ist, wobei ferner optional der zweite Eckbereich dem dritten Eckbereich gegenüberliegt.

8. Vorrichtung nach einem der Ansprüche 1 bis 7, wobei die drehbar gelagerte Kupplungsscheibe (118) mit der Vorspanneinrichtung gekoppelt ist, optional aufweisend weitere Koppelstangen (124, 126), von denen jede mit einem jeweiligen Positionieranschlag (106, 108) und mit der drehbar gelagerten Kupplungsscheibe (118) gekoppelt ist, wobei die weiteren Koppelstangen (124, 126) mit der drehbar gelagerten Kupplungsscheibe (118) gelenkig verbunden und mit dem jeweiligen Positionieranschlag (106, 108) mittels einer jeweiligen ersten Linearführung (110, 112) gelenkig verbunden sind, wobei ferner optional die weiteren Koppelstangen (124, 126) einen geradlinigen Abschnitt (130, 140) aufweisen, der an die jeweilige erste Linearführung (110, 112) angrenzt, und einen gebogenen Abschnitt (132, 138) aufweisen, der um die drehbar gelagerte Kupplungsscheibe (118) herumgeführt ist.

9. Vorrichtung nach einem der Ansprüche 1 bis 8, wobei die Koppelstange (144) geradlinig ist, wobei optional eine der weiteren Koppelstangen (124, 126) und die Koppelstange (144) mittels eines gemeinsamen Verbindungselements (404) an der drehbar gelagerten Kupplungsscheibe (118) verbunden sind.

10. Vorrichtung nach Anspruch 8 oder 9, ferner aufweisend eine dritte Koppelstange (152), mittels welcher die Vorspanneinrichtung mit der drehbar gelagerten Kupplungsscheibe (118) gekoppelt ist, wobei die dritte Koppelstange (152) mit der drehbar gelagerten Kupplungsscheibe (118) gelenkig verbunden ist, wobei optional die dritte Koppelstange (152) geradlinig ist, wobei ferner optional eine der weiteren Koppelstangen (124, 126) und die dritte Koppelstange (152) mittels eines gemeinsamen Verbindungselements (402) an der drehbar gelagerten Kupplungsscheibe (118) verbunden sind, wobei ferner optional die weiteren Koppelstangen (124, 126), die Koppelstange (144) und die dritte Koppelstange (152) koplanar angeordnet sind, wobei ferner optional die weiteren Koppelstangen (124, 126), die Koppelstange (144) und die dritte Koppelstange (152) auf einer kreisförmigen Deckfläche der Kupplungsscheibe (118) montiert sind, wobei ferner optional jede der Koppelstangen (124, 126, 144, 152) mittels eines zugehörigen Verbindungselements (122, 134, 136, 150) an der drehbar gelagerten Kupplungsscheibe (118) verbunden sind, und die Verbindungselemente (134, 136) der weiteren Koppelstangen (124, 126) radial weiter innen an der Kupplungsscheibe (118) montiert sind als die Verbindungselemente (122, 150) der anderen Koppelstangen (144,152).

11. Vorrichtung nach einem der Ansprüche 7 bis 10, wobei die Vorspanneinrichtung und die Betätigungseinrichtung (114) koplanar montiert sind.

12. Vorrichtung nach einem der Ansprüche 6 bis 11, wobei die Betätigungseinrichtung (114) und das Kraftübertragungselement derart gekoppelt sind, dass in dem die Probenträgerplatte in Eingriff nehmenden Betriebszustand das Kraftübertragungselement eine Schüttelkraft der Schütteleinrichtung derart auf die Betätigungseinrichtung (114) überträgt, dass die Betätigungseinrichtung (114) trotz Einwirkens der übertragenen Schüttelkraft gegenüber einer Trägerplatte des Grundkörpers (102) in einer Ruhestellung verbleibt, wobei optional die Betätigungseinrichtung (114) und das Kraftübertragungselement derart mittels der Koppelstange (144) gekoppelt sind, dass in dem die Probenträgerplatte in Eingriff nehmenden Betriebszustand die Koppelstange (144) die Schüttelkraft senkrecht zu einer Verschieberichtung der Betätigungseinrichtung (114) überträgt.

13. Verfahren zum Positionieren einer Probenträgerplatte, wobei das Verfahren aufweist:

Aufnehmen der Probenträgerplatte auf einem Grundköper (102) einer Vorrichtung;
Einspannen der Probenträgerplatte an vorgespannt und verschiebbar gelagerten Positionieranschlägen (106, 108), die in diagonal gegenüberliegenden ersten Eckbereichen des Grundkörpers (102) angeordnet sind;
Betätigen einer in einem zweiten Eckbereich des Grundkörpers (102) angeordneten Betätigungseinrichtung (114) zum Überführen der Positionieranschläge (106, 108) zwischen einem die Probenträgerplatte in Eingriff nehmenden Betriebszustand und einem die Probenträgerplatte freigebenden Betriebszustand;
Übertragen einer Betätigungskraft von der Betätigungseinrichtung (114) auf die Positionieranschläge (106, 108) mittels eines Kraftübertragungselements, welches eine drehbar gelagerte Kupplungsscheibe (118) aufweist, wobei mittels einer Koppelstange (144) die Betätigungseinrichtung (114) mit der drehbar gelagerten Kupplungsscheibe (118) gekoppelt ist;
wobei die Kupplungsscheibe (118) mechanisch mit der Betätigungseinrichtung (114) und den Positionieranschlägen (106, 108) gekoppelt ist;
wobei die Koppelstange (144) mit der drehbar gelagerten Kupplungsscheibe (118) gelenkig verbunden und mit der Betätigungseinrichtung (114) mittels einer zweiten Linearführung (146) gelenkig verbunden ist;
wobei der zweite Eckbereich des Grundkörpers (102) von den ersten Eckbereichen des Grundkörpers (102) verschieden ist;
wobei zwei von vier Ecken der im Wesentlichen rechteckförmigen Vorrichtung mit den Positionieranschlägen (106, 108) und eine andere der vier Ecken mit der Betätigungseinrichtung (114) als funktionelle Komponenten versehen sind.

## Claims

1. An apparatus for positioning a sample carrier plate, wherein the apparatus comprises:

a main body (102) for receiving the sample carrier plate;
positioning stops (106, 108), disposed in diagonally opposed first corner regions of the main body (102), and which are pre-tensioned for clamping the sample carrier plate and arranged displaceably;
an actuating device (114) arranged in a second corner region of the main body (102), which is arranged in such a way that by operating the actuating device (114), the positioning stops (106, 108) are transferred between an operating condition in which the sample carrier plate is engaged, and an operating state in which the sample carrier plate is released;
a force transmitting member adapted to transmit an actuating force from the actuating device (114) to the positioning stops (106, 108);
wherein the force transmitting member is rotatably supported on a coupling disk (118);
a coupling rod (144), which by means of the actuating device is rotatably coupled to the coupling disk (118), wherein the coupling disk (118) is mechanically coupled with the actuating device (114) and the positioning stops (106, 108);
wherein the coupling rod (144) has an articulated connection to the rotatably supported coupling disk (118);

wherein the second corner region of the main body (102) is different from the first corner region of the main body (102);

wherein two out of four corners of the substantially rectangular apparatus are provided with the positioning stops (106, 108) and another one of the four corners is provided with the actuating device (114) as functional components.

2. The apparatus of claim 1,
wherein the positioning stops (106, 108) are disposed exclusively at two opposite first corner regions of the main body (102), and/or wherein the positioning stops (106, 108) in each first corner region are formed by means of two stop elements (106, 108, 304, 306), with two mutually perpendicular stop lines for placement on a rectangular sample carrier plate, and/or wherein the positioning stops (106, 108) in each first corner region are formed by means of two stop elements (106, 108, 304, 306) having a round cross-section for placement on the sample carrier plate, wherein optionally the stop elements (106, 108, 304, 306) are formed as circular cylindrical pins, as conical pins, as pins having a circular cylindrical cross-section and a conical section, as pins having a plurality of rings of different outside diameter mounted thereon, or as pins having a plurality of steps of different outside diameter formed integrally thereon.

3. The apparatus of claim 1 or 2,
wherein each of the positioning stops (106, 108) is assigned a first linear guide element (110, 112), in which a respective positioning stop (106, 108) is mounted so as to be linearly displaceable, wherein optionally the first linear guide element (110, 112) is oriented so that the positioning stops (106, 108) are mounted so as to be displaceable in parallel to each other, wherein further optionally, the first linear guide element (110, 112) are adapted such that the positioning stops (106, 108) are mounted displaceably, and offset in parallel with respect to a diagonal of the main body.

4. The apparatus of one of claims 1 to 3,
wherein the actuating device (114) comprises a slider for manual actuation by a user, wherein optionally the slider has a gripping member having an arrow-shaped end section.

5. The apparatus of one of claims 1 to 4,
wherein the actuating device (114) comprises a coupling piece for coupling with an electrical actuator, further optionally comprising the electrical actuator device, which engages with the coupling piece for transmission of an electrical actuating force to the force transmitting member, wherein optionally the electrical actuator device comprises a drive shaft, and a lever arm disposed thereon, which acts on a force transmitting pin for transmission of the electrical actuating force, which is disposed movably in a linear guide groove of the actuating element.

6. The apparatus of one of claims 1 to 5,
further comprising an electrically controllable pipetting device, which is adapted for pipetting fluids into cavities of the sample carrier plate, and/or further comprising a shaking device, which is configured to shake the sample carrier plate mounted on the main body (102), wherein optionally the shaking device is configured to act on the sample carrier plate with an orbital movement.

7. The apparatus of one of claims 1 to 6,
further comprising a pre-stressing device disposed in or adjacently to a third corner region of the main body (102), which is adapted for transmitting a pre-stress, in particular a tensile pre-stress, to the force transmitting member, wherein optionally, the pre-stressing device comprises a spring, one end of which is fastened to the main body, and the other end of which is coupled to the force transmitting member, wherein further optionally, the second corner region lies opposite to the third corner region.

8. The apparatus of one of claims 1 to 7,
wherein the rotatably mounted coupling disk (118) is coupled to the actuating device, optionally comprising further coupling rods (124, 126), each of which is coupled to the respective positioning stop (106, 108), and to the rotatably mounted coupling disk, wherein the further coupling rods (124, 126) are coupled in an articulated manner to the rotatably mounted coupling disk, and are connected to the respective positioning stop in an articulated manner by means of a respective first linear guide, wherein further optionally the further coupling rods (124, 126) comprise a rectilinear section (130, 140), which adjoins the respective first linear guide (110, 112), and comprises a bent section (132, 138) which is guided around the rotatably mounted coupling disk.

9. An apparatus according to one of claims 1 to 8,
wherein the coupling rod (144) is linear, wherein optionally one of the further coupling rods (124, 126) and the coupling rod (144) are connected by means of a common connecting element (404) at the rotatably mounted coupling disk (118).

10. An apparatus according to claims 8 or 9, further comprising a third coupling rod (152), by means of which the pre-stressing device is coupled to the rotatably mounted coupling disk, wherein the third coupling rod (152) is connected in an articulated manner to the rotatably mounted coupling disk, wherein optionally the third coupling rod (152) is linear, wherein further optionally one of the further coupling rods (124, 126) and the third coupling rod (152) are connected by means of a common coupling element (402) to the rotatably mounted coupling disk (118), wherein further optionally the further coupling rods (124, 126), the coupling rod (144), and the third coupling rod (152) are arranged in a coplanar manner, wherein further optionally the further coupling rods (124, 126), the coupling rod (144), and the third coupling rod (152) are mounted on a circular top surface of the coupling disk (118), wherein further optionally each of the coupling rods (124, 126, 144, 152) are connected by means of an associated connecting element (122, 134, 136, 150) on the rotatably mounted coupling disk (118), and the connecting elements (134, 136) of the further coupling rods (124, 126) are mounted radially further inward on the connecting elements (122, 150) than the connecting elements (122, 150) of the other coupling rods (144, 152).

11. The apparatus according to one of claims 7 to 10, wherein the pre-stressing device and the coupling rod (114) are mounted in a coplanar manner.

12. The apparatus according to one of claims 6 to 11, wherein the actuating device (114) and the force transmitting member are coupled in such a manner that that in the operating state engaging the sample carrier plate, the force transmitting element transmits a shaking force of the shaking device to the actuating device (114) in such a manner that the actuating device (114), even in spite of the action of the transmitted shaking force, remains in a rest position with respect to a carrier plate of the main body (102), wherein optionally, the actuating device (114) and the force transmitting member are coupled by means of the coupling rod in such a manner that in the operating state engaging the sample carrier plate, the coupling rod (144) transmits the shaking force perpendicularly to a direction of displacement of the actuating device.

13. A method for positioning a sample carrier plate, wherein the method comprises:

receiving the sample carrier plate on a main body (102) of a device;
clamping the sample carrier plate on prestressed and displaceably mounted positioning stops (106, 108), which are disposed diagonally opposite first corner regions of the main body (102);
actuating an actuating device (114) disposed in a second corner region of the main body (102) for transferring the positioning stops between an operating state in which the sample carrier plate is engaged, and an operating state in which the sample carrier plate is released; and

transmitting an actuating force from the actuating device (114) to the positioning stops (106, 108) by means of a force transmitting member, wherein the actuating device is coupled to a rotatably mounted coupling disk (118) by means of a coupling rod (144) as a force transmitting member;
wherein the coupling disk (118) is mechanically coupled to the actuating device and the positioning stops (106, 108);
wherein the coupling rod (144) has an articulated connection to the rotatably supported coupling disk (118), and is connected to the actuating device (114) by means of a second linear guide element;
wherein the second corner region of the main body (102) is different from the first corner regions of the main body (102);
wherein two out of four corners of the substantially rectangular apparatus are provided with the positioning stops (106, 108) and another one of the four corners is provided with the actuating device (114) as functional components.

## Revendications

1. Dispositif destiné à positionner un plateau porte-échantillon, le dispositif présentant :

un corps de base (102) destiné à recevoir le plateau porte-échantillon ;
des butées de positionnement (106, 108) disposées dans des premières zones d'angle diagonalement opposées du corps de base (102), et qui sont précontraintes pour le serrage du plateau porte-échantillon et logées de manière déplaçable ;
un dispositif de manoeuvre (114) disposé dans une deuxième zone d'angle du corps de base (102), et qui est configuré de telle façon que, moyennant la manoeuvre du dispositif de manoeuvre (114), les butées de positionnement (106, 108) puissent être transférées entre un état opératoire de prise du plateau porte-échantillon et un état opératoire de libération du plateau porte-échantillon ;
un élément de transmission de force, qui est configuré pour transmettre une force de manoeuvre du dispositif de manoeuvre (114) aux butées de positionnement (106, 108) ;
sachant que l'élément de transmission de force présente un disque d'accouplement (118) logé de manière tournante,
une tringle de couplage (144), au moyen de laquelle le dispositif de manoeuvre (114) est couplé au disque d'accouplement (118) logé de manière tournante, sachant que le disque d'accouplement (118) est couplé mécaniquement au dispositif de manoeuvre (114) et aux butées de positionnement (106, 108) ;

sachant que la tringle de couplage (144) est reliée de manière articulée au disque d'accouplement (118) logé de manière tournante et est reliée de manière articulée au dispositif de manoeuvre (114) au moyen d'un guidage linéaire (146) ;

sachant que la deuxième zone d'angle du corps de base (102) est différente des premières zones d'angle du corps de base (102) ;

sachant que deux de quatre angles du dispositif de forme sensiblement rectangulaire sont pourvus des butées de positionnement (106, 108) et un autre des quatre angles est pourvu du dispositif de manoeuvre (114) en tant que composants fonctionnels.

2. Dispositif selon la revendication 1, dans lequel les butées de positionnement (106, 108) sont disposées exclusivement au niveau de deux premières zones d'angle opposées du corps de base (102) et/ou dans lequel les butées de positionnement (106, 108) sont constituées dans chaque première zone d'angle au moyen de deux éléments de butée (106, 108, 304, 306) avec des lignes de butée perpendiculaires l'une à l'autre pour se caler contre un plateau porte-échantillon rectangulaire et/ou dans lequel les butées de positionnement (106, 108) sont constituées dans chaque première zone d'angle au moyen de deux éléments de butée (106, 108, 304, 306) avec une section transversale ronde pour se caler contre le plateau porte-échantillon, sachant que facultativement les éléments de butée (106, 108, 304, 306) sont constitués comme pions en forme de cylindre circulaire, comme pions coniques, comme pions présentant une partie en forme de cylindre circulaire et une partie conique, comme pions présentant une pluralité d'anneaux de diamètre extérieur différent apposés sur ceux-ci, ou comme pions présentant une pluralité d'étages de diamètre extérieur différent intégralement formés sur ceux-ci.

3. Dispositif selon la revendication 1 ou 2, dans lequel, à chacune des butées de positionnement (106, 108), est associé un premier élément de guidage linéaire (110, 112) dans lequel la butée de positionnement (106, 108) respective est logée de manière déplaçable linéairement, sachant que facultativement les premiers éléments de guidage linéaire (110, 112) sont orientés de telle façon que les butées de positionnement (106, 108) soient logées de manière déplaçable parallèlement les unes aux autres, sachant qu'en outre facultativement les premiers éléments de guidage linéaire (110, 112) sont configurés de telle façon que les butées de positionnement (106, 108) soient logées de manière déplaçable de façon parallèlement décalée par rapport à une diagonale du corps de base (102).

4. Dispositif selon l'une des revendications 1 à 3, dans lequel le dispositif de manoeuvre (114) présente un coulisseau pour la manoeuvre manuelle par un utilisateur, sachant que facultativement le coulisseau présente une pièce de préhension dont la partie d'extrémité est en forme de flèche.

5. Dispositif selon l'une des revendications 1 à 4, dans lequel le dispositif de manoeuvre (114) présente une pièce d'accouplement pour l'accouplement avec un dispositif actionneur électrique, présentant en outre facultativement le dispositif actionneur électrique, qui interfère dans la pièce d'accouplement pour transmettre une force de manoeuvre électrique à l'élément de transmission de force, sachant que facultativement le dispositif actionneur électrique présente un arbre d'entraînement et un bras-levier disposé sur celui-ci, qui, pour transmettre la force de manoeuvre électrique, agit sur un pion de transmission de force qui est disposé de manière mobile dans une rainure de guidage linéaire de l'élément de manoeuvre.

6. Dispositif selon l'une des revendications 1 à 5, présentant en outre un dispositif de pipetage apte à être commandé électriquement, qui est configuré pour pipeter un fluide dans des cavités du plateau porte-échantillon et/ou présentant en outre un dispositif d'agitation qui est configuré pour agiter le plateau porte-échantillon monté sur le corps de base (102), sachant que facultativement le dispositif d'agitation est configuré pour imprimer un mouvement orbital au plateau porte-échantillon.

7. Dispositif selon l'une des revendications 1 à 6, présentant en outre un dispositif de précontrainte disposé dans ou au voisinage d'une troisième zone d'angle du corps de base (102), et qui est configuré pour transmettre une précontrainte, en particulier une précontrainte en traction, à l'élément de transmission de force, sachant que facultativement le dispositif de précontrainte présente un ressort (120) dont l'une extrémité est fixée au corps de base (102) et dont l'autre extrémité est couplée à l'élément de transmission de force, sachant qu'en outre facultativement la deuxième zone d'angle est opposée à la troisième zone d'angle.

8. Dispositif selon l'une des revendications 1 à 7, dans lequel le disque d'accouplement (118) logé de manière tournante est couplé au dispositif de précontrainte, présentant facultativement des tringles de couplage (124, 126) supplémentaires dont chacune est couplée à une butée de positionnement (106, 108) respective et au disque d'accouplement (118) logé de manière tournante, sachant que les tringles de couplage (124, 126) supplémentaires sont reliées de manière articulée au disque d'accouplement (118) logé de manière tournante et qu'elles sont reliées de manière articulée à la butée de positionnement (106, 108) respective moyennant un premier guidage linéaire (110, 112) respectif, sachant qu'en outre facultativement les tringles de couplage (124, 126) supplémentaires présentent une partie (130, 140) rectiligne qui confine au premier guidage linéaire (110, 112) respectif, et présentent une partie courbe (132, 138) dont le tracé contourne le disque d'accouplement (118) logé de manière tournante.

9. Dispositif selon l'une des revendications 1 à 8, dans lequel la tringle de couplage (144) est rectiligne, sachant que facultativement l'une des tringles de couplage (124, 126) supplémentaires et la tringle de couplage (144) sont reliées au disque d'accouplement (118) logé de manière tournante au moyen d'un élément de jonction (404) commun.

10. Dispositif selon la revendication 8 ou 9, présentant en outre une troisième tringle de couplage (152) au moyen de laquelle le dispositif de précontrainte est couplé au disque d'accouplement (118) logé de manière tournante, sachant que la troisième tringle de couplage (152) est reliée de manière articulée au disque d'accouplement (118) logé de manière tournante, sachant que facultativement la troisième tringle de couplage (152) est rectiligne, sachant qu'en outre facultativement l'une des tringles de couplage (124, 126) supplémentaires et la troisième tringle de couplage (152) sont reliées au disque d'accouplement (118) logé de manière tournante au moyen d'un élément de jonction (402) commun, sachant qu'en outre facultativement les tringles de couplage (124, 126) supplémentaires, la tringle de couplage (144) et la troisième tringle de couplage (152) sont disposées de manière coplanaire, la tringle de couplage (144) et la troisième tringle de couplage (152) sont montées sur une surface de couverture de forme circulaire du disque d'accouplement (118), sachant qu'en outre facultativement chacune des tringles de couplage (124, 126, 144, 152) sont reliées au disque d'accouplement (118) logé de manière tournante au moyen d'un élément de jonction (122, 134, 136, 150) associé, et les éléments de jonction (134, 136) des tringles de couplage (124,126) supplémentaires sont montées davantage à l'intérieur radialement au niveau du disque d'accouplement (118) que les éléments de jonction (122, 150) des autres tringles de couplage (144, 152).

11. Dispositif selon l'une des revendications 7 à 10, dans lequel le dispositif de précontrainte et le dispositif de manoeuvre (114) sont montés de façon coplanaire.

12. Dispositif selon l'une des revendications 6 à 11, dans lequel le dispositif de manoeuvre (114) et l'élément de transmission de force sont couplés de telle façon que, dans l'état opératoire de prise du plateau porte-échantillon, l'élément de transmission de force transmette une force d'agitation du dispositif d'agitation au dispositif de manoeuvre (114) de telle façon que le dispositif de manoeuvre (114) demeure dans une position de repos par rapport à une plaque-support du corps de base (102) malgré l'incidence de la force d'agitation transmise, sachant que facultativement le dispositif de manoeuvre (114) et l'élément de transmission de force sont couplés au moyen de la tringle de couplage (144) de telle façon que, dans l'état opératoire de prise du plateau porte-échantillon, la tringle de couplage (144) transmette la force d'agitation perpendiculairement à un sens de déplacement du dispositif de manoeuvre (114).

13. Procédé destiné à positionner un plateau porte-échantillon, le procédé présentant :

la réception du plateau porte-échantillon sur un corps de base (102) d'un dispositif ;
le serrage du plateau porte-échantillon contre des butées de positionnement (106, 108) logées de manière précontrainte et déplaçable, et qui sont disposées dans des premières zones d'angle diagonalement opposées du corps de base (102) ;
la manoeuvre d'un dispositif de manoeuvre (114) disposé dans une deuxième zone d'angle du corps de base (102) pour transférer les butées de positionnement (106, 108) entre un état opératoire de prise du plateau porte-échantillon et un état opératoire de libération du plateau porte-échantillon ;
la transmission d'une force de manoeuvre du dispositif de manoeuvre (114) aux butées de positionnement (106, 108) au moyen d'un élément de transmission de force, lequel présente un disque d'accouplement (118) logé de manière tournante, sachant que, moyennant une tringle de couplage (144), le dispositif de manoeuvre (114) est couplé au disque d'accouplement (118) logé de manière tournante ;
sachant que le disque d'accouplement (118) est couplé mécaniquement au dispositif de manoeuvre (114) et aux butées de positionnement (106, 108) ;
sachant que la tringle de couplage (144) est reliée de manière articulée au disque d'accouplement (118) logé de manière tournante et est reliée de manière articulée au dispositif de manoeuvre (114) au moyen d'un deuxième guidage linéaire (146) ;
sachant que la deuxième zone d'angle du corps de base (102) est différente des premières zones d'angle du corps de base (102) ;
sachant que deux de quatre angles du dispositif de forme sensiblement rectangulaire sont pourvus des butées de positionnement (106, 108) et un autre des quatre angles est pourvu du dispositif de manoeuvre (114) en tant que composants fonctionnels.

Fig. 1

EP 2 408 563 B1

Fig. 2

Fig. 3

Fig. 4

EP 2 408 563 B1

Fig. 5

EP 2 408 563 B1

Fig. 7

Fig. 6

Fig. 8

Fig. 9

EP 2 408 563 B1

Fig. 10

Fig. 11

Fig. 12

EP 2 408 563 B1

Fig. 13

Fig. 14

EP 2 408 563 B1

Fig. 15

EP 2 408 563 B1

Fig. 16

Fig. 17

EP 2 408 563 B1

Fig. 18

Fig. 19

Fig. 20

EP 2 408 563 B1

Fig. 21

EP 2 408 563 B1

Fig. 22

EP 2 408 563 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1186891 A
- WO 8607232 A
- EP 1111391 A
- DE 102004021664
- WO 9913339 A
- WO 2008135565 A